(19) Europäisches Patentamt
European Patent Office
Office européen des brevets

(11) EP 2 133 819 A2

(12) EUROPEAN PATENT APPLICATION

(43) Date of publication:
16.12.2009 Bulletin 2009/51

(51) Int Cl.:
*G06K 9/00* (2006.01)

(21) Application number: 09162271.2

(22) Date of filing: 09.06.2009

(84) Designated Contracting States:
AT BE BG CH CY CZ DE DK EE ES FI FR GB GR HR HU IE IS IT LI LT LU LV MC MK MT NL NO PL PT RO SE SI SK TR

(30) Priority: 11.06.2008 JP 2008152643

(71) Applicant: Sony Corporation
Tokyo 108-0075 (JP)

(72) Inventors:
- Otani, Takahide
TOKYO 108-0075 (JP)
- Kosakai, Ryota
TOKYO 108-0075 (JP)

(74) Representative: Beder, Jens
Mitscherlich & Partner
Patent-und Rechtsanwälte
Sonnenstraße 33
80331 München (DE)

# (54) Image processing apparatus and image processing method

(57) An image processing apparatus includes a projecting unit that projects a registered face image containing at least part of a face onto a surface of a three-dimensional model having a shape in which at least part of the three-dimensional model in one direction on the surface onto which an image is projected is bent to a front side, so that a horizontal direction of the face contained in the registered face image substantially coincides with the one direction, a transforming unit that transforms the three-dimensional model on the basis of an orientation of a face contained in a target image, a generating unit that generates a two-dimensional image by projecting the registered face image projected on the surface of the transformed three-dimensional model, onto a plane, and an identifying unit that identifies the face contained in the target image, by comparing the generated two-dimensional image against the target image.

FIG. 1

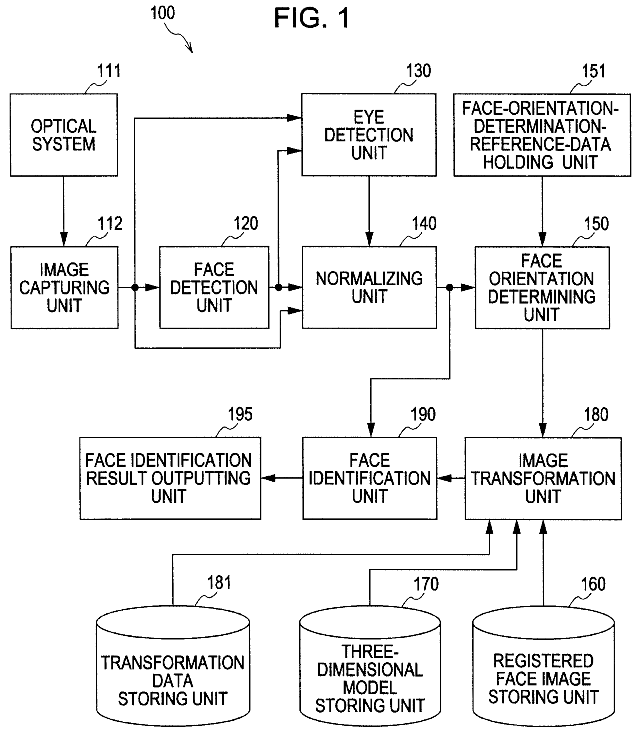


EP 2 133 819 A2

## Description

BACKGROUND OF THE INVENTION

1. Field of the Invention

The present invention relates to an image processing apparatus, in particular, an image processing apparatus and an image processing method which identify the face of a person or the like contained in an image.

2. Description of the Related Art

Image capturing apparatuses such as a digital still camera and a digital video camera which capture a subject such as a person and record the captured image are in widespread use. In addition, there have been proposed a large number of image processing apparatuses including a face detection function for detecting the face of a person from a captured image.

Further, in recent years, there have been proposed face identification techniques for identifying the face of a specific person from among faces detected by using such a face detection function. For example, there has been proposed an image processing apparatus that locates the position of a corresponding region on an input image, which is a region corresponding to a target region on a registered image, and identifies a face in the input image on the basis of the position of this corresponding region (see, for example, Japanese Unexamined Patent Application No. 2007-115109 (Fig. 3)).

For example, in fields such as security and entertainment, as a part of biometrics authentication, face identification techniques for identifying individuals by using face images containing person's faces are being put into practical use.

SUMMARY OF THE INVENTION

According to the above-mentioned techniques of the related art, accuracy enhancement can be achieved for faces in frontal orientation. However, for example, when shooting a person's face, although a frontal face is shot in many cases, situations are also conceivable in which a non-frontal face is shot. Therefore, cases may arise in which a captured image containing a frontal face and a captured image containing a non-frontal face are recorded. As described above, when faces contained in captured images differ in orientation, face images contained in the captured images can differ greatly even though these images belong to the same person, and there is a risk of unstable face identification performance. Accordingly, when identifying a face contained in a captured image, for example, it is conceivable to perform identification by making the orientation of a face contained in a target captured image the same as the orientation of a registered face, by using a complex three-dimensional face model corresponding to a person's face.

However, in cases where, for example, face identification is performed by an image capturing apparatus such as a compact digital still camera, the image capturing apparatus is often capable of a relatively limited amount of computation related to face identification. Thus, it may be difficult to perform face identification by using the above-mentioned complex three-dimensional face model. Accordingly, it is important to enhance the accuracy of face identification irrespective of the face orientation, while reducing the load of a face identification process.

It is desirable to enhance the accuracy of face identification while reducing the load of a face identification process.

According to an embodiment of the present invention, there is provided an image processing apparatus, an image processing method for the image processing apparatus, and a program for causing a computer to execute the image processing method, the image processing apparatus including: a projecting unit that projects a registered face image containing at least a part of a face onto a surface of a three-dimensional model, which has a shape in which at least a part of the three-dimensional model in one direction on the surface onto which an image is to be projected is bent to a front side, so that a horizontal direction of the face contained in the registered face image substantially coincides with the one direction; a transforming unit that transforms the three-dimensional model on the basis of an orientation of a face contained in a target image; a generating unit that generates a two-dimensional image by projecting the registered face image projected on the surface of the three-dimensional model transformed by the transforming unit, onto a plane; and an identifying unit that identifies the face contained in the target image, by comparing the two-dimensional image generated by the generating unit against the target image. Therefore, the registered face image is projected onto the surface of the three-dimensional model, the three-dimensional model is transformed on the basis of the orientation of the face contained in the target image, the registered face image projected on the surface of the transformed three-dimensional model is projected onto a plane to generate the two-dimensional model, and this two-dimensional image and the target image are compared against each other to identify the face contained in the target image.

In the above-mentioned embodiment, the three-dimensional model may have a shape in which both ends in the one direction are bent to a back side, with a part of the three-dimensional model in the one direction on the surface taken as a bend line, and the projecting unit may project the registered face image onto the surface of the three-dimensional model so that a centerline with respect to the horizontal direction of the face contained in the registered face image substantially coincides with the bend line. Therefore, the registered face image is projected onto the surface of the three-dimensional model so that the centerline with respect to the horizontal direction of the face contained in the registered face image, and the bend line of the three-dimensional model substantially coincide with each other.

In the above-mentioned embodiment, the registered face image may be a normalized image normalized on the basis of eyes of the face contained in the registered face image, the image processing apparatus may further include an eye detection unit that detects eyes of the face contained in the target image, and a normalizing unit that normalizes the target image to generate a normalized target image, on the basis of the eyes detected by the eye detection unit, the transforming unit may rotate and translate the three-dimensional model with reference to a midpoint of a line segment connecting the eyes of the face contained in the registered face image projected on the surface of the three-dimensional model, so that positions of eyes of a face contained in the two-dimensional image generated by the generating unit and positions of eyes of a face contained in the normalized target image become the same, and the identifying unit may identify the face contained in the target image, by comparing the two-dimensional image generated by the generating unit against the normalized target image. Therefore, the three-dimensional model is rotated and translated with reference to the midpoint of a line segment connecting the eyes of the face contained in the registered face image, so that the positions of the eyes of the face contained in the two-dimensional image and the positions of the eyes of the face contained in the normalized target image become the same, and the two-dimensional image and the normalized target image are compared against each other to thereby identify the face contained in the target image.

In the above-mentioned embodiment, the image processing apparatus may further include a transformation parameter storing unit that stores transformation parameters in association with a face orientation, the transformation parameters being used for projecting the registered face image onto the surface of the three-dimensional model so that the centerline with respect to the horizontal direction of the face contained in the registered face image substantially coincides with the bend line, rotating and translating the three-dimensional model with reference to the midpoint of the line segment connecting the eyes of the face contained in the registered face image projected on the surface of the three-dimensional model, so that the positions of the eyes of the face contained in the two-dimensional image generated by the generating unit and the positions of the eyes of the face contained in the normalized target image become the same, and projecting the registered face image projected on the surface of the three-dimensional model that has been rotated and translated, onto a plane to generate a two-dimensional image for each face orientation, and the generating unit may generate the two-dimensional image from the registered face image by using the transformation parameters stored in association with the orientation of the face contained in the target image. Therefore, the two-dimensional image is generated from the registered face image by using the transformation parameters stored in association with the orientation of the face contained in the target image.

In the above-mentioned embodiment, the image processing apparatus may further include an organ detection unit that detects two organs of the face contained in the target image, and a normalizing unit that normalizes the target image to generate a normalized target image, on the basis of the two organs detected by the organ detection unit, the transforming unit may rotate and translate the three-dimensional model so that positions of two organs of a face contained in the two-dimensional image generated by the generating unit and positions of two organs of a face contained in the normalized target image become the same, and the identifying unit may identify the face contained in the target image, by comparing the two-dimensional image generated by the generating unit against the normalized target image. Therefore, the three-dimensional model is rotated and translated so that the positions of the two organs of the face contained in the two-dimensional image and the positions of the two organs of the face contained in the normalized target image become the same, and the two-dimensional image and the normalized target image are compared against each other to identify the face contained in the target image.

In the above-mentioned embodiment, the image processing apparatus may further include a transformation data storing unit that stores values of a rotation angle and a translation distance of the three-dimensional model in association with a face orientation, and the transforming unit may rotate and translate the three-dimensional model by using the values of the rotation angle and the translation distance which are stored in association with the orientation of the face contained in the target image. Therefore, the three-dimensional model is rotated and translated by using the values of the rotation angle and the translation distance stored in association with the orientation of the face contained in the target image.

In the above-mentioned embodiment, the identifying unit may identify the face contained in the target image by comparing, as an object of comparison with the target image, one of the registered face image determined on the basis of the orientation of the face contained in the target image, and the two-dimensional image generated by the generating unit, against the target image. Therefore, as an object of comparison with the target image, one of the registered face image determined on the basis of the orientation of the face contained in the target image, and the two-dimensional image generated by the generating unit is compared against the target image to identify the face contained in the target image.

In the above-mentioned embodiment, the image processing apparatus may further include a registered face image storing unit that stores an image containing at least a part of a frontal face, as the registered face image, and a determining unit that determines the orientation of the face contained in the target image, and if it is determined by the determining unit that the orientation of the face contained in the target image is frontal, the identifying unit may identify the face contained in the target image by comparing the registered face image against the target image. Therefore, if the orientation of the face contained in the target image is determined to be frontal, the registered face image and the target image are compared against each other to thereby identify the face contained in the target image.

In the above-mentioned embodiment, the image processing apparatus may further include an image capturing unit that captures a subject to generate a captured image, a face detection unit that detects a face contained in the captured image, and a determining unit that determines an orientation of the face detected by the face detection unit, and the identifying unit may identify the face contained in the captured image by comparing the two-dimensional image generated, by the generating unit against a face image containing the face detected by the face detection unit. Therefore, the subject is captured to generate the captured image, the face contained in this captured image is detected, the orientation of this detected face is determined, and the two-dimensional image and the face image are compared against each other to thereby identify the face contained in the captured image.

According to an embodiment of the present invention, there is provided an image processing apparatus, an image processing method for the image processing apparatus, and a program for causing a computer to execute the image processing method, the image processing apparatus including: a registered face image storing unit that stores a registered face image, which is a normalized face image containing at least a part of a face and normalized on the basis of eyes of the face; a determining unit that makes a determination of an orientation of a face contained in a target image; an eye detection unit that detects eyes of the face contained in the target image; a normalizing unit that normalizes the target image to generate a normalized target image, on the basis of the eyes detected by the eye detection unit; a transformation parameter storing unit that stores transformation parameters in association with a face orientation that is subject to the determination, the transformation parameters being used for projecting the registered face image onto a surface of a three-dimensional model, which has a shape in which both ends in one direction on the surface onto which an image is to be projected are bent to a back side, with a part of the three-dimensional model in the one direction taken as a bend line, so that a centerline with respect to a horizontal direction of the face contained in the registered face image substantially coincides with the bend line, rotating and translating the three-dimensional model so that positions of the eyes of the face contained in the registered face image projected on the surface of the three-dimensional model become specific positions, with reference to a midpoint of a line segment connecting the eyes, and projecting the registered face image projected on the surface of the three-dimensional model that has been rotated and translated, onto a plane to generate a two-dimensional image for each face orientation that is subject to the determination; an image transformation unit that generates the two-dimensional image from the registered face image by using the transformation parameters stored in association with the orientation of the face determined by the determining unit; and an identifying unit that identifies the face contained in the target image, by comparing the two-dimensional image generated by the image transformation unit against the normalized target image. Therefore, the orientation of the face contained in the target image is determined, the eyes of this face are detected, the target image is normalized on the basis of the eyes, the two-dimensional image is generated from the registered face image by using the transformation parameters stored in association with the determined face orientation, and this two-dimensional image and the target image are compared against each other to thereby identify the face contained in the target image.

BRIEF DESCRIPTION OF THE DRAWINGS

Fig. 1 is a block diagram showing a functional configuration example of an image processing apparatus according to an embodiment of the present invention;

Figs. 2A to 2C are diagrams showing a transition that takes place when a normalizing unit normalizes a face image according to an embodiment of the present invention;

Figs. 3A to 3C are diagrams showing a transition that takes place when a normalizing unit normalizes a face image according to an embodiment of the present invention;

Figs. 4A and 4B are diagrams each schematically showing a face image that is subject to face orientation determination by a face orientation determining unit according to an embodiment of the present invention;

Figs. 5A and 5B are diagrams respectively showing the contents of a face-orientation-determination-reference-data holding unit, and the range of cumulative result values used for face orientation determination by a face orientation determining unit according to an embodiment of the present invention;

Figs. 6A to 6E are diagrams showing examples of result of face orientation determination by a face orientation determining unit according to an embodiment of the present invention;

Fig. 7 is a diagram schematically showing registered face images stored in a registered face image storing unit according to an embodiment of the present invention;

Figs. 8A to 8D are diagrams each schematically showing a three-dimensional model stored in a three-dimensional model storing unit according to an embodiment of the present invention;

Fig. 9 is a diagram showing the contents of a transformation data storing unit according to an embodiment of the present invention;

Figs. 10A and 10B are diagrams schematically showing a transition that takes place when a registered face image is transformed by an image transformation unit according to an embodiment of the present invention;

Figs. 11A to 11C are diagrams schematically showing a transition that takes place when a registered face image is transformed by an image transformation unit according to an embodiment of the present invention;

Fig. 12 is a diagram schematically showing a transition that takes place when a registered face image is transformed by an image transformation unit according to an embodiment of the present invention;

Figs. 13A and 13B are diagrams schematically showing the relationship between a three-dimensional model and an image projection plane in a case when a registered face image is transformed by an image transformation unit according to an embodiment of the present invention;

Figs. 14A and 14B are diagrams showing a transition that takes place when a registered face image is transformed into a check face image by an image transformation unit according to an embodiment of the present invention;

Figs. 15A and 15B are diagrams showing a check face image and a normalized face image, and a registered face image and a normalized face image, which are subject to comparison by a face identification unit according to an embodiment of the present invention;

Fig. 16 is a flowchart showing the processing steps of a face identification process performed by an image processing apparatus according to an embodiment of the present invention;

Fig. 17 is a flowchart showing the processing steps of a face orientation determining process performed by an image processing apparatus according to an embodiment of the present invention;

Fig. 18 is a block diagram showing a functional configuration example of an image processing apparatus according to an embodiment of the present invention;

Fig. 19 is a diagram showing the contents of a transformation data storing unit according to an embodiment of the present invention;

Figs. 20A to 20C are diagrams schematically showing a calculation method for calculating transformation parameters according to an embodiment of the present invention;

Figs. 21A and 21C are diagrams schematically showing a calculation method for calculating transformation parameters according to an embodiment of the present invention;

Figs. 22A and 22B are diagrams schematically showing a calculation method for calculating transformation parameters according to an embodiment of the present invention;

Fig. 23 is a diagram showing a face identification result graph summarizing face identification results outputted from a face identification unit according to an embodiment of the present invention;

Fig. 24 is a flowchart showing the processing steps of a face identification process performed by an image processing apparatus according to an embodiment of the present invention; and

Figs. 25A to 25D are diagrams each showing an example of three-dimensional model according to an embodiment of the present invention.

DESCRIPTION OF THE PREFERRED EMBODIMENTS

Next, an embodiment of the present invention will be described in detail with reference to the drawings.

Fig. 1 is a block diagram showing a functional configuration example of an image processing apparatus 100 according to an embodiment of the present invention. The image processing apparatus 100 includes an optical system 111, an image capturing unit 112, a face detection unit 120, an eye detection unit 130, a normalizing unit 140, a face orientation determining unit 150, a face-orientation-determination-reference-data holding unit 151, a registered face image storing unit 160, a three-dimensional model storing unit 170, an image transformation unit 180, a transformation data storing unit 181, a face identification unit 190, and a face identification result outputting unit 195. The image processing apparatus 100 can be realized by, for example, an image capturing apparatus such as a digital still camera that can extract feature quantities through image analysis with respect to a captured image of a subject, and apply various kinds of image processing by using the extracted feature quantities.

The optical system 111 is configured by a plurality of lenses (such as a zoom lens and a focus lens) that collect light from a subject. Incident light from the subject is supplied to the image capturing unit 112 via these lenses and an iris (not shown).

The image capturing unit 112 transforms the incident light from a subject to generate a captured image in accordance with predetermined image capturing parameters, and outputs the generated captured image to the face detection unit 120, the eye detection unit 130, and the normalizing unit 140. That is, in the image capturing unit 112, an optical signal from a subject made incident via the optical system 111 undergoes photoelectric conversion by an image capturing device (not shown) into an analog image signal. Then, a signal processing unit (not shown) applies camera signal processing such as noise removal, A/D (Analog/Digital) conversion, and the like to this analog image signal obtained by the photoelectric conversion, thereby generating a captured image.

The face detection unit 120 detects the face of a person contained in the captured image outputted from the image capturing unit 112, and outputs face detection information related to the detected face to the eye detection unit 130 and the normalizing unit 140. As the face detection method, it is possible to employ, for example, a face detection method based on a matching between the actual image and a template in which luminance distribution information of a face is recorded (see, for example, Japanese Unexamined Patent Application Publication No. 2004-133637), or a face detection method based on human face feature quantities, skin color portions, or the like contained in a captured image. The face detection information includes the position and size of a detected face on a captured image. The position of a detected face on a captured image can be set as, for example, the center position of a face image on the captured image, and the size of a detected face on a captured image can be set as, for example, the horizontal and vertical lengths of a face image on the captured image. Through this face detection information, it is possible to locate a face image that is a rectangular captured image containing at least a part of a face on a captured image.

The eye detection unit 130 detects the eyes of a person's face contained in the captured image outputted from the image capturing unit 112, and outputs eye information related to the detected eyes to the normalizing unit 140. That is, the eye detection unit 130 extracts a face image corresponding to the face detected by the face detection unit 120, from the captured image outputted from the image capturing unit 112, by using the face detection information (position and size) outputted from the face detection unit 120. Then, the eye detection unit 130 detects the eyes in this extracted face image. As this eye detection method, like the face detection method, it is possible to employ, for example, an eye detection method based on a matching between the actual image and a template in which luminance distribution information of eyes is recorded. The eye detection information includes the positions of the detected eyes in a face image. The positions in a face image can be set as, for example, the center positions of the eyes in the face image. The face image can be normalized by using this eye detection information. The eye detection unit 130 represents an example of an eye detection unit and an organ detection unit described in the claims.

The normalizing unit 140 performs normalization on a face image corresponding to the face detected by the face detection unit 120, on the basis of the eye detection information outputted from the eye detection unit 130, and outputs the face image that has been normalized (normalized face image) to the face orientation determining unit 150 and the face identification unit 190. In addition, the normalizing unit 140 holds a normalization template for performing normalization, and normalizes a face image on the basis of this normalization template. As this normalization template, it is possible to use, for example, a normalization template 141 that takes the positions of the eyes as a reference, as shown in Figs. 2C and 3C. That is, the normalizing unit 140 applies a scaling process and a rotating process as well as resolution conversion to a face image so that the positions of the eyes in the face image coincide with the positions of the eyes in the normalization template 141, thereby normalizing the face image. The normalization of a face image and the normalization template will be described later in detail with reference to Figs. 2A to 3C.

The face orientation determining unit 150 determines the orientation of a face detected by the face detection unit 120, by using face orientation determination reference data stored in the face-orientation-determination-reference-data holding unit 151, and outputs this determination result to the image transformation unit 180. That is, the face orientation determining unit 150 calculates to what extent determination conditions according to face orientation determination reference data stored in the face-orientation-determination-reference-data holding unit 151 are satisfied, and obtains a cumulative result value related to face orientation. Then, on the basis of this cumulative result value, the face orientation determining unit 150 determines the orientation of a face detected by the face detection unit 120. Face orientations to be determined by the face orientation determining unit 150 are, for example, "frontal", "right-facing", and "left-facing". As a method of determining a face orientation, it is possible to employ, for example, a determination method that determines the face orientation by using the geometrical features of face organs such as eyes, nose, and mouth, and a determination method that performs a determination process based on a discriminator using a difference in luminance value between two points on a face image to be determined. The face orientation determination will be described later in detail with reference to Figs. 4A to 6E. The face orientation determining unit 150 represents an example of a determining unit described in the claims.

The face-orientation-determination-reference-data holding unit 151 holds face orientation determination reference data used for determination by the face orientation determining unit 150. This face orientation determination reference data is reference data that has been sufficiently trained for face orientations to be determined by the face orientation determining unit 150. The face orientation determination reference data will be described later in detail with reference to Figs. 5A and 5B.

The registered face image storing unit 160 stores, as registered face images, face images used for face identification by the face identification unit 190, and supplies the stored registered face images to the image transformation unit 180. The registered face images stored in the registered face image storing unit 160 will be described later in detail with reference to Fig. 7.

The three-dimensional model storing unit 170 stores a three-dimensional model for transforming a registered face image stored in the registered face image storing unit 160, and supplies the stored three-dimensional model to the image transformation unit 180. The three-dimensional model stored in the three-dimensional model storing unit 170 will be described later in detail with reference to Figs. 8A to 8D.

The image transformation unit 180 transforms a registered face image stored in the registered face image storing unit 160 to generate a check face image, and outputs the generated check face image to the face identification unit 190. That is, the image transformation unit 180 projects a registered face image onto the surface of a three-dimensional model stored in the three-dimensional model storing unit 170 so that the horizontal direction of the three-dimensional model substantially coincides with the horizontal direction of a face contained in the registered face image. Then, the image transformation unit 180 transforms the three-dimensional model with the registered face image pasted, on the basis of the face orientation determination result outputted from the face orientation determining unit 150. Then, the image transformation unit 180 projects the registered face image pasted on the transformed three-dimensional model, onto a plane to generate a check face image (two-dimensional image). When a determination result indicating "frontal" is outputted from the face orientation determining unit 150, the image transformation unit 180 outputs a registered face image stored in the registered face image storing unit 160 to the face identification unit 190 as a check face image, without performing transformation on the registered face image. This transformation of a registered face image will be described later in detail with reference to Figs. 10A to 13B. The image transformation unit 180 represents an example of a projecting unit, a transforming unit, and a generating unit described in the claims.

The transformation data storing unit 181 stores transformation data used by the image transformation unit 180 to perform transformation, in association with the orientation of a face to be determined by the face orientation determining unit 150, and supplies the stored transformation data to the image transformation unit 180. The transformation data storing unit 181 will be described later in detail with reference to Fig. 9.

The face identification unit 190 identifies whether or not a face detected by the face detection unit 120 is a face (registered face) contained in a registered face image stored in the registered face image storing unit 160, and outputs the identification result to the face identification result outputting unit 195. That is, the face identification unit 190 identifies whether or not a face detected by the face detection unit 120 is a registered face, by comparing a normalized face image outputted from the normalizing unit 140 against a check face image outputted from the image transformation unit 180. As this face identification method, for example, it is possible to employ a face identification method that extracts feature quantities respectively from a registered face image and a normalized face image that are to be compared against each other, and performs face identification on the basis of the extracted feature quantities. That is, the feature quantities extracted from the registered face image, and the feature quantities extracted from the normalized face image are compared against each other to calculate a similarity between these feature quantities. Then, if the calculated similarity exceeds a threshold, the face contained in the normalized face image is determined to be a registered face. Also, as the face identification method, for example, it is also possible to employ an identification method that performs an identification process based on a weak discriminator using a difference in luminance value between two points on each of a registered face image and a normalized face image that are to be compared against each other, or the like. The face identification unit 190 represents an example of an identifying unit described in the claims.

The face identification result outputting unit 195 outputs a face identification result outputted from the face identification unit 190. For example, when an identification result indicating that a face detected by the face detection unit 120 is a registered face is outputted from the face identification unit 190, the face identification result outputting unit 195 makes a display to that effect. For example, the face identification result outputting unit 195 can attach a specific marker to a face that has been determined as a registered face, on a captured image displayed on a display unit (not shown). Also, the face identification result outputting unit 195 can attach the name of the corresponding person in the vicinity of a face that has been determined as a registered face. Also, the face identification result outputting unit 195 can update the image capturing parameters of the image capturing unit 112 on the basis of a face that has been determined as a registered face.

Figs. 2A to 3C are diagrams showing a transition that takes place when the normalizing unit 140 normalizes a face image according to an embodiment of the present invention. Figs. 2A and 3A are diagrams showing captured images 200 and 201 outputted from the image capturing unit 112, respectively. Figs. 2B and 3B are diagrams showing face images 203 and 213 corresponding to faces detected by the face detection unit 120, respectively. Figs. 2C and 3C are diagrams showing the normalization template 141 used when normalizing a face image, and normalized face images 206 and 216, respectively. The normalization template 141 is a template that is held in the normalizing unit 140 and used when the normalizing unit 140 performs normalization. Reference positions 142 and 143 each serving as a reference when performing normalization are defined in the normalization template 141. In the examples shown in Figs. 2A to 3C, a description will be given of a case in which processes such as a scaling process and a rotating process are performed on a face image so that the positions of the eyes in a face image detected by the eye detection unit 130 coincide with the reference positions 142 and 143 in the normalization template 141. The example shown in Figs. 2A to 2C are directed to a case in which the orientation of a face 202 detected by the face detection unit 120 is relatively frontal, and the example shown in Figs. 3A to 3C are directed to a case in which the orientation of a face 212 detected by the face detection unit 120 is right-facing. A person 201 contained in the captured image 200 shown in Figs. 2A to 2C, and a person 211 contained in the captured image 210 shown in Figs. 3A to 3C are assumed to be the same person.

As shown in Fig. 2A, for example, when the captured image 200 outputted from the image capturing unit 112 is inputted to the face detection unit 120, the face detection unit 120 detects the face 202 contained in the captured image 200. When the captured image 200 outputted from the image capturing unit 112, and the face detection result outputted from the face detection unit 120 are inputted to the eye detection unit 130, the eye detection unit 130 detects the eyes of the face 202 contained in the captured image 200. In Fig. 2B, the center positions of the eyes of the face 202 contained in the face image 203 are indicated as eyes' positions 204 and 205.

The normalizing unit 140 performs a scaling process, a rotating process, and the like on the face image 203 so that the detected eyes' positions 204 and 205 coincide with the reference positions 142 and 143 in the normalization template 141 shown in Fig. 2C. For example, a rotating process is performed on the face image 203, and the normalized face image 206 as a face image that has been normalized is generated. As shown in Fig. 2C, in the normalized face image 206, the eyes' positions 204 and 205 of the face 202 coincide with the reference positions 142 and 143 in the normalization template 141.

In the case shown in Figs. 3A to 3C as well, as in Figs. 2A to 2C, for example, a scaling process, a rotating process, and the like are performed on the face image 213 so that eyes' positions 214 and 215 of the face 212 coincide with the reference positions 142 and 143 in the normalization template 141 shown in Fig. 3C. For example, a scaling process and a rotating process are performed on the face image 213, and the normalized face image 216 is generated.

As shown in Figs. 2C and 3C, even in the case of the same person's face, there are times when the normalized face image varies greatly depending on the orientation of the face at the time of image capture. Thus, for example, cases are conceivable in which the face identification result differs between when face identification is performed using the normalized image 206 shown in Fig. 2C, and when face identification is performed using the normalized image 216 shown in Fig. 3C. That is, there is a risk that even in the case of the same person, accurate identification of the face may become difficult depending on the orientation of the face. Accordingly, in the embodiment of the present invention, on the basis of the orientation of a face detected by the face detection unit 120, a registered face image is transformed to generate a check face image, and face identification is performed by using this check face image.

Next, a detailed description will be given of a face orientation determination with reference to the drawings.

Figs. 4A and 4B are diagrams each schematically showing a face image that is subject to face orientation determination by the face orientation determining unit 150 according to an embodiment of the present invention. The normalized face image 206 shown in Fig. 4A is the same as the normalized face image 206 shown in Fig. 2C, and the normalized face image 216 shown in Fig. 4B is the same as the normalized face image 216 shown in Fig. 3C. When comparing a frontal face and a right-facing face with each other, generally, characteristic features such as the reduced area of the cheek on the right side often arise in the right-facing face. Accordingly, face orientation determination reference data corresponding to these characteristic states related to face orientation is held in the face-orientation-determination-reference-data holding unit 151, and this face orientation determination reference data is used for the face orientation determination. A face orientation determining method using this face orientation determination reference data will be described later in detail with reference to Figs. 5A to 6E. Also, positions 221 to 226 shown in Fig. 4B will be described later in detail with reference to Figs. 5A and 5B.

Figs. 5A and 5B are diagrams respectively showing the contents of the face-orientation-determination-reference-data holding unit 151, and the range of cumulative result values used for face orientation determination by the face orientation determining unit 150 according to an embodiment of the present invention. That is, Fig. 5A shows a configuration example of face orientation determination reference data held in the face-orientation-determination-reference-data holding unit 151, and Fig. 5B shows the range of cumulative result values related to face orientations which are calculated by using the face orientation determination reference data. In the embodiment of the present invention, description is directed to an example in which a face orientation determination is made by using a correlation determination method based on pixel difference.

The face orientation determination reference data held in the face-orientation-determination-reference-data holding unit 151 includes a Coordinate 0(x, y) 152 of a normalized face image and a Coordinate 1(x, y) 153 of the normalized face image, a threshold (m) 154, and a weight (r) 155 of reference data. The Coordinate 0(x, y) 152 and the Coordinate 1(x, y) 153 are coordinates indicating the positions of two points in the normalized face image. The threshold (m) 154 is a threshold with respect to the level difference (luminance difference) between Coordinate 0 and Coordinate 1. Further, the weight (r) 155 of reference data is a weight coefficient that is added on the basis of the result of a comparison between the level difference (luminance difference) between Coordinate 0 and Coordinate 1, and the threshold (m). The face-orientation-determination-reference-data holding unit 151 stores n pieces of reference data each made up of a combination of these values. The reference data illustrated in the embodiment of the present invention is referred to as weak discriminator (weak hypothesis).

Values constituting the face orientation determination reference data are set by using, for example, the top 300 to 1000 most effective combinations, among those combinations learned by a machine learning algorithm such as the AdaBoost.

Next, with reference to the drawings, a detailed description will be given of an example in which a face orientation determination is made with respect to a normalized face image by using face orientation determination reference data. In this example, with the upper left corner of the normalized face image 216 shown in Fig. 4B taken as the origin, the horizontal axis is taken as the x-axis, and the vertical axis is taken as the y-axis. In addition, a description will be given of a case in which a face determining process is performed with respect to the normalized face image 216 by using face orientation determination reference data held in the face-orientation-determination-reference-data holding unit 151.

For example, a position in the normalized face image 216 corresponding to the value of the Coordinate 0(x, y) 152 stored on the first row (Reference Data 0) of face orientation determination reference data is defined as a position 221, and a position in the normalized face image 216 corresponding to the value of the Coordinate 1(x, y) 153 is defined as a position 222. Also, a position in the normalized face image 216 corresponding to the value of the Coordinate 0(x, y) 152 stored on the second row (Reference Data 1) of face orientation determination reference data is defined as a position 223, and a position in the normalized face image 216 corresponding to the value of the Coordinate 1(x, y) 153 is defined as a position 224. Further, a position in the normalized face image 216 corresponding to the value of the Coordinate 0(x, y) 152 stored on the third row (Reference Data 2) of face orientation determination reference data is defined as a position 225, and a position in the normalized face image 216 corresponding to the value of the Coordinate 1(x, y) 153 is defined as a position 226.

First, 0 is set for the value of a score S used for performing a determination, and computations using values contained in Reference Data 0 of the face orientation determination reference data is performed. Specifically, a luminance value A(0) at the position 221 corresponding to the value of the Coordinate 0(x, y) 152 contained in Reference Data 0 of the face orientation determination reference data, and a luminance value B(0) at the position 222 corresponding to the value of the Coordinate 1(x, y) 153 are extracted. Then, the difference C(0) between the respective extracted luminance values is calculated by using the equation below.

$$C(0) = A(0) - B(0)$$

Subsequently, by comparing the calculated value C(0) of the difference between the respective luminances, against the value of the threshold (m) 154 contained in Reference Data 0 of the face orientation determination reference data, it is determined whether or not the calculated value C(0) is larger than the threshold (m) 154. If the calculated value C(0) is equal to or smaller than the value of the threshold (m) 154, the value of the weight (r) 155 contained in Reference Data 0 of the face orientation determination reference data is added to the score S. On the other hand, if the calculated value C(0) is larger than the value of the threshold (m) 154, the value of the weight (r) 155 contained in Reference Data 0 of the face orientation determination reference data is not added to the score S.

Subsequently, the above-described computations are repeated by using the values contained in Reference Data 1 of the face orientation determination reference data. Specifically, a luminance value A(1) at the position 223 corresponding to the value of the Coordinate 0(x, y) 152 contained in Reference Data 1 of the face orientation determination reference data, and a luminance value B(1) at the position 224 corresponding to the value of the Coordinate 1(x, y) 153 are extracted. Then, the difference C(1) between the respective extracted luminance values is calculated by using the equation below.

$$C(1) = A(1) - B(1)$$

Subsequently, by comparing the calculated value C(1) of the difference between the respective luminances, against the value of the threshold (m) 154 contained in Reference Data 1 of the face orientation determination reference data, it is determined whether or not the calculated value C(1) is larger than the threshold (m) 154. If the calculated value C(1) is equal to or smaller than the value of the threshold (m) 154, the value of the weight (r) 155 contained in Reference Data 1 of the face orientation determination reference data is added to the score S. On the other hand, if the calculated value C(1) is larger than the value of the threshold (m) 154, the value of the weight (r) 155 contained in Reference Data 1 of the face orientation determination reference data is not added to the score S.

Subsequently, from Reference Data 3 of the face orientation determination reference data onwards, the above-described computations are repeated by sequentially using values up to those of Reference Data n-1.

That is, when performing a determination process using face orientation determination reference data with respect to the normalized face image 216, C(i) is calculated by using Equation (A), by sequentially using values contained in Reference Data 0 to n - 1 of the face orientation determination reference data. Then, it is determined whether or not the calculated value of C(i) satisfies Equation (B). Here, a variable i is an integer, and is a value from 0 to n - 1.

$$C(i) = A(i) - B(i) \quad \ldots \quad (A)$$

$$C(i) > m(i) \quad \ldots \quad (B)$$

If the calculated value of C(i) satisfies Equation (B), the value of r(i) is not added to the score S, and if the calculated value of C(i) does not satisfy Equation (B), the value of r(i) is added to the score S. Here, the value of luminance corresponding to the Coordinate 0(x, y) 152 contained in Reference Data i is indicated by A(i), and the value of luminance corresponding to the Coordinate 1(x, y) 153 contained in Reference Data i is indicated by B(i). Also, the value of the threshold (m) 154 contained in Reference Data i is indicated by m(i), and the value of the weight (r) 155 contained in Reference Data i is indicated by r(i).

Then, after computations using values contained in Reference Data 0 to n - 1 of the face orientation determination reference data are finished, respective attributes are determined on the basis of the value of the score S as a cumulative result value.

Here, a score $S_n(P)$ obtained after finishing computations using values contained in Reference Data 0 to n - 1 of the face orientation determination reference data can be represented by Equation (C) below.

$$S_n(P) = \sum_{i=0}^{n-1} r_i \cdot h(P(x_{i0}, y_{i0}) - P(x_{i1}, y_{i1}) - m_i) \quad \cdots (C)$$

Here, $S_n(P)$ indicates a cumulative result value of Reference Data 0 to n - 1, $r_i$ indicates the value of the weight (r) 155 contained in Reference Data i, and $P(x_{i0}, y_{i0})$ indicates the value of luminance corresponding to the Coordinate 0(x, y) 152 contained in Reference Data i. Also, $P(x_{i1}, y_{i1})$ indicates the value of luminance corresponding to the Coordinate 1(x, y) 153 contained in Reference Data i, $m_i$ indicates the value of the threshold (m) 154 contained in Reference Data i, and n indicates the number of pieces of reference data. Also, h(z) indicates a function that becomes "0" when $z > 0$, and becomes "1" when $z \leq 0$.

Next, with reference to Fig. 5B, a detailed description will be given of a determination method that determines face attributes on the basis of the cumulative result value calculated by using values contained in Reference Data 0 to n - 1 of the face orientation determination reference data. The range of cumulative result values related to face orientation shown in Fig. 5B is set to a range of, for example, -1000 to +1000. The embodiment of the present invention is directed to an example in which the face orientation determining unit 150 determines three face orientations including "right-facing", "frontal", and "left-facing".

For example, it is assumed that learning is performed on the basis of the above-described machine learning algorithm, with learning samples for right-facing orientation at the time of learning taken on the positive side, and learning samples for left-facing orientation taken on the negative side. In the case where learning has been performed in this way, when determining a face orientation, "right-facing", "frontal", or "left-facing" is determined by using thresholds 156 and 157 shown in Fig. 5B.

For example, in the range of cumulative result values related to face orientation shown in Fig. 5B, if the score $S_nP$ that is a cumulative result value calculated by using values contained in Reference Data 0 to n - 1 of the face orientation determination reference data is less than the threshold 156, the face orientation is determined to be "left-facing". On the other hand, if the score $S_nP$ is larger than the threshold 157, the face orientation is determined to be "right-facing". If $S_nP$ falls between the threshold 156 and the threshold 157, the face orientation is determined to be neither "right-facing" nor "left-facing" but is determined to be "frontal". These determination results are outputted from the face orientation determining unit 150 to the image transformation unit 180.

Figs. 6A to 6E are diagrams showing examples of result of face orientation determination by the face orientation determining unit 150 according to an embodiment of the present invention. Faces 231 to 235 shown in Figs. 6A to 6E are faces contained in normalized face images inputted to the face orientation determining unit 150. The faces 231 and 232 shown in Figs. 6A and 6B are facing to the right with respect to the frontal direction. Hence, the faces 231 and 232 are determined to be right-facing by the face orientation determining unit 150. On the other hand, the faces 234 and 235 shown in Figs. 6D and 6E are facing to the left with respect to the frontal direction. Hence, the faces 234 and 235 are determined to be left-facing by the face orientation determining unit 150. Also, the face 233 shown in Fig. 6C is facing the front. Hence, the face 233 is determined to be "frontal" by the face orientation determining unit 150.

Fig. 7 is a diagram schematically showing registered face images stored in the registered face image storing unit 160 according to an embodiment of the present invention. Here, registered face images 161 to 163 stored in the registered face image storing unit 160 each represent determination data for performing a face identification process by the face identification unit 190, with respect to a normalized face image that has been normalized by the normalizing unit 140. According to the embodiment of the present invention, check face images into which the registered face images 161 to 163 have been transformed by the image transformation unit 180 on the basis of the result of determination by the face orientation determining unit 150 are also used as determination data. Fig. 7 shows an example in which the registered face images 161 to 163 corresponding to the faces of three people are stored in the registered face image storing unit 160. Here, the registered face images 161 to 163 stored in the registered face image storing unit 160 are assumed to be normalized face images that have been normalized so that the positions of the eyes coincide with the reference positions 142 and 143 in the normalization template 141 shown in Figs. 2C and 3C.

As shown in Fig. 7, in the registered face image storing unit 160, identification numbers and names for identifying registered face images are stored in association with individual registered face images. For example, "0001", "0002", and "0003" are assigned as identification numbers to the registered face images 161 to 163, and "Ichiro Koda" "Hanako Koda" and "Misaki Otoyama" are stored as names in association with the registered face images 161 to 163. The face contained in the registered face image 161 (identification number: "001", name: "Ichiro Koda") is assumed to be the face of the same person as the faces 202 and 212 shown in Figs. 2A to 3C.

Figs. 8A to 8D are diagrams each schematically showing a three-dimensional model 300 stored in the three-dimensional model storing unit 170 according to an embodiment of the present invention. Fig. 8A shows the three-dimensional model 300 as seen from the front side, Fig. 8B shows the three-dimensional model 300 as seen from the right side, Fig. 8C shows the three-dimensional model 300 as seen from the left side, and Fig. 8D shows the three-dimensional model 300 as seen from the top side.

The three-dimensional model 300 is a three-dimensional CG (Computer Graphics) model having a shape obtained by bending a rectangle in half to the back side along a bend line that is a line connecting between the respective midpoints of the top and bottom sides of the rectangle. Also, as shown in Fig. 8D, the shape of the three-dimensional model 300 is such that each of the left half rectangle and the right half rectangle is bent by an angle $\alpha$ relative to the state prior to the bending. Here, the angle $\alpha$ can be set as, for example, 10 to 20 degrees.

Fig. 9 is a diagram showing the contents of the transformation data storing unit 181 according to an embodiment of the present invention. The transformation data storing unit 181 stores a yaw rotation angle ($\theta$) 184, a roll rotation angle ($\phi$) 185, a translation distance along x-axis (Tx) 186, a translation distance along y-axis (Ty) 187, and a translation distance along z-axis (Tz) 188. These values are stored in association with Left-facing 182 and Right-facing 183. It should be noted that these values represent transformation data used so that the positions of the eyes of a face contained in a check face image, which is generated after the image transformation unit 180 rotates and translates a three-dimensional model, coincide with the positions of the eyes of a face contained in a registered face image. In Fig. 9, description of values other than the yaw rotation angle ($\theta$) 184 is omitted.

The yaw rotation angle ($\theta$) 184 is a value indicating an angle for performing yaw rotation of the three-dimensional model 300 having a registered face image projected on its surface.
The roll rotation angle ($\theta$) 185 is a value indicating an angle for performing roll rotation of the three-dimensional model 300 having a registered face image projected on its surface. While this example is directed to a case where $\theta$ = -30 or 30, it is possible to set, for example, $\theta$ = -30 to -20 or 20 to 30.

The translation distance along x-axis (Tx) 186 is a value indicating a distance for performing parallel translation along the x-axis direction of the three-dimensional model 300 having a registered face image projected on its surface. The translation distance along y-axis (Ty) 187 is a value indicating a distance for performing parallel translation along the y-axis direction of the three-dimensional model 300 having a registered face image projected on its surface. The translation distance along z-axis (Tz) 188 is a value indicating a distance for performing parallel translation along the z-axis direction of the three-dimensional model 300 having a registered face image projected on its surface.

Here, when a face orientation is determined to be "left-facing" or "right-facing" by the face orientation determining unit 150, the image transformation unit 180 performs rotation and parallel translation with respect to the three-dimensional model 300 by using values stored in association with the determined face orientation (Left-facing 182 or Right-facing 183). Such rotation and parallel translation will be described later in detail with reference to Figs. 11A to 11C.

Figs. 10A to 12 are diagrams schematically showing a transition that takes place when a registered face image is transformed by the image transformation unit 180 according to an embodiment of the present invention. That is, Figs. 10A to 12 show a transition in a case when Coordinate g1(x, y) on the registered face image 161 shown in Fig. 10A is transformed into Coordinate g4(u, v) on a check face image 340 shown in Fig. 12. The transition shown in Figs. 10A to 12 will be described later in detail with reference to Figs. 13A and Equation (1).

$$\begin{pmatrix} x \\ y \\ 1 \\ 1 \end{pmatrix} = F \cdot G \cdot H \cdot I \cdot J \cdot K \begin{pmatrix} u \\ v \\ 1 \\ 1 \end{pmatrix} \quad \cdots(1)$$

$$F = \begin{pmatrix} 1 & 0 & 0 & -Cx \\ 0 & 1 & 0 & -Cy \\ 0 & 0 & -\dfrac{1}{x\tan\alpha} & 0 \\ 0 & 0 & 0 & 1 \end{pmatrix}$$

$$G = \begin{pmatrix} \cos\theta & 0 & -\sin\theta & 0 \\ 0 & 1 & 0 & 0 \\ \sin\theta & 0 & \cos\theta & 0 \\ 0 & 0 & 0 & 1 \end{pmatrix}$$

$$H = \begin{pmatrix} \cos\phi & \sin\phi & 0 & 0 \\ -\sin\phi & \cos\phi & 0 & 0 \\ 0 & 0 & 1 & 0 \\ 0 & 0 & 0 & 1 \end{pmatrix}$$

$$I = \begin{pmatrix} 1 & 0 & 0 & -T_x \\ 0 & 1 & 0 & -T_y \\ 0 & 0 & 1 & -T_z \\ 0 & 0 & 0 & 1 \end{pmatrix}$$

$$J = \begin{pmatrix} \frac{Z+Z_c}{f} & 0 & 0 & 0 \\ 0 & \frac{Z+Z_c}{f} & 0 & 0 \\ 0 & 0 & Z & 0 \\ 0 & 0 & 0 & 1 \end{pmatrix}$$

$$K = \begin{pmatrix} 1 & 0 & 0 & -Cu \\ 0 & 1 & 0 & -Cv \\ 0 & 0 & 1 & 0 \\ 0 & 0 & 0 & 1 \end{pmatrix}$$

Equation (1) represents a determinant for transforming Coordinate g1(x, y) on the registered face image 161 shown in Fig. 10A into Coordinate g4(u, v) on the check face image 340 shown in Fig. 12.

Figs. 13A and 13B are diagrams schematically showing the relationship between the three-dimensional model 300 and an image projection plane 350 in a case when a registered face image is transformed by the image transformation unit 180 according to an embodiment of the present invention.

Fig. 10A shows the registered face image 161 stored in the registered face image storing unit 160. Since transformation of the registered face images 162 and 163 stored in the registered face image storing unit 160 is the same as the transformation of the registered face image 161, description thereof is omitted here. In this example, the description is directed to a case in which, as shown in Fig. 10A, the registered face image 161 is transformed with the upper left corner of the registered face image 161 taken as an origin O1, the horizontal axis taken as the x-axis, and the vertical axis taken as the y-axis.

Fig. 10B shows a case in which the registered face image 161 is projected onto the surface of the three-dimensional model 300 stored in the three-dimensional model storing unit 170. For the simplicity of description, Figs. 10A to 12 show the three-dimensional model 300 as viewed diagonally from the left. As shown in Fig. 10B, the registered face image 161 is projected onto the surface of the three-dimensional model 300 in such a way that the coordinates of four corners 311 to 314 of the registered face image 161 are transformed into the coordinates of four corners 321 to 324 of the three-dimensional model 300. Also, the registered face image 161 is projected onto the surface of the three-dimensional model 300 in such a way that a midpoint 315 of the top side and a midpoint 316 of the bottom side of the registered face image 161 are transformed into vertexes 325 and 326 of the bend line of the three-dimensional model 300. Through this projection, as shown in Fig. 10B, the registered face image 161 is pasted onto the surface of the three-dimensional model 300. In the following description, the three-dimensional model 300 with the registered face image 161 pasted on its surface will be referred to as registered face image three-dimensional model 330.

Here, the matrix (x y 1 1) on the left hand side of Equation (1) is a matrix corresponding to Coordinate g1(x, y) of the registered face image 161, and the matrix (u v 1 1) on the right hand side is a matrix corresponding to Coordinate g4(u, v) of the check face image 340. The matrix F on the right hand side is a matrix for projecting the image pasted on the three-dimensional model 300 onto a plane to generate a two-dimensional image, and changing the origin of coordinates in this two-dimensional image. That is, by using the inverse matrix $F^{-1}$ of the matrix F, as shown in Fig. 10A, the origin 01 at the upper left corner of the registered face image 161 can be changed to the center position 02 of the registered face image 161. Then, as shown in Fig. 10B, the registered face image 161 can be projected onto the surface of the three-dimensional model 300.

Fig. 11A shows the registered face image three-dimensional model 330 with the registered face image 161 pasted on its surface, as viewed diagonally from the left. Fig. 11B shows the registered face image three-dimensional model 330 with the registered face image 161 pasted on its surface, as viewed from the top. In this example, as shown in Figs. 11A and 11B, with the midpoint on the bend line of the registered face image three-dimensional model 330 taken as an origin 03, the axis along the horizontal direction is defined as the x-axis, the axis along the vertical direction is defined as the y-axis, and the axis orthogonal to the x-axis and the y-axis is defined as the z-axis. A description will be given of a case in which the registered face image three-dimensional model 330 is rotated and translated. In this example, the description is directed to a case in which a face orientation is determined to be "right-facing" by the face orientation determining unit 150.

Fig. 11C shows a case in which the registered face image three-dimensional model 330 is rotated and translated. Here, the matrix G in Equation (1) is a matrix for performing yaw rotation of the three-dimensional model 300 in three-dimensional space. The angle of yaw rotation based on the matrix G is $\theta$. The matrix H in Equation (1) is a matrix for performing roll rotation of the three-dimensional model 300 in three-dimensional space. The angle of roll rotation based on the matrix H is $\phi$. The matrix I is a matrix for performing parallel translation of the three-dimensional model 300 in three-dimensional space. The translation distance along the x-axis direction based on the matrix I is Tx, the translation distance along the y-axis direction is Ty, and the translation distance along the z-axis direction is Tz. By using the inverse matrices $G^{-1}$, $H^{-1}$, and $I^{-1}$ of the matrices G to I, rotation and parallel translation of the registered face image three-dimensional model 330 can be performed. The angles $\theta$ and $\phi$, and the translation distances Tx, Ty, and Tz are values determined in accordance with the face orientation determined by the face orientation determining unit 150, and are stored in the transformation data storing unit 181 shown in Fig. 9. The values stored in the transformation data storing unit 181 are values used for transforming a two-dimensional image (the check face image 340 shown in Fig. 12), which is obtained after performing rotation and parallel translation of the registered face image three-dimensional model 330, into a normalized image.

Figs. 13A and 13B schematically show a case in which the registered face image pasted on the surface of the registered face image three-dimensional model 330 which has been transformed by using the inverse matrices $G^{-1}$, $H^{-1}$, and $I^{-1}$ is projected onto a plate to generate a two-dimensional image (the check face image 340 shown in Fig. 12). Fig. 13A shows the relationship between the registered face image three-dimensional model 330, and the image projection plane 350 for generating a two-dimensional image, as viewed from the y-axis direction. Fig. 13B shows the relationship between the registered face image three-dimensional model 330 and the image projection plane 350 as viewed from the x-axis direction. As shown in Figs. 13A and 13B, the registered face image pasted on the surface of the registered face image three-dimensional model 330 is projected onto the image projection plane 350 in such a way that the registered face image pasted on the surface of the registered face image three-dimensional model 330 converges to a reference point (optical center) K1. In this way, the image projected on the image projection plane 350 is generated as the check face image 340.

Here, let a distance Z be the distance from the reference point K1 to the origin 03 of the registered face image three-dimensional model 330, and a distance f be the distance from the reference point K1 to the image projection plane 350. The distance f can be set as, for example, the same value as the length of one side at the left and right ends of the registered face image three-dimensional model 330. The matrix J using the distances Zc and f is a matrix for projecting an image onto the surface of the three-dimensional model 300 by using triangle similitude. Also, as shown in Fig. 12, by using the inverse matrix $J^{-1}$ of the matrix J, the registered face image pasted on the surface of the registered face image three-dimensional model 330 can be projected onto the image projection plane 350 to generate the check face image 340. The matrix K is a matrix for changing the origin of coordinates in a two-dimensional image. That is, by using the inverse matrix $K^{-1}$ of the matrix K, as shown in Fig. 12, an origin 05 located at the center position of the check face image 340 can be changed to the upper left corner 06 of the check face image 340.

Figs. 14A and 14B are diagrams showing a transition that takes place when the registered face image 161 is transformed into the check face image 340 by the image transformation unit 180 according to an embodiment of the present invention. Fig. 14A shows the registered face image 161 prior to the transformation, and Fig. 14B shows the check face image 340 after the transformation. As described above, the registered face image 161 is an image containing a frontal face 241, and is an image that has been normalized on the basis of positions 242 and 243 of the eyes of the frontal face 241. In contrast, the check face image 340 is an image containing a face 341 that has been rendered to appear right-facing through image transformation by the image transformation unit 180, and is an image that has been normalized on the basis of positions 342 and 343 of the eyes of the face 341. That is, the positions 242 and 243 of the eyes in the registered face image 161, and the positions 342 and 343 of the eyes in the check face image 340 are the same.

Figs. 15A and 15B are diagrams showing a check face image and a normalized face image, and a registered face image and a normalized face image, which are subject to comparison by the face identification unit 190 according to an embodiment of the present invention. The normalized face image 216 shown in Figs. 15A and 15B is the same as the normalized face image 216 shown in Fig. 3C. The check face image 340 shown in Fig. 15A is the same as the check face image 340 shown in Fig. 14B, and is an image that has been generated by the image transformation unit 180 on the basis of a face orientation determined by the face orientation determining unit 150. On the other hand, the registered face image 161 shown in Fig. 15B is the same as the registered face image 161 stored in the registered face image storing unit 160 shown in Fig. 7, and is an image that has not undergone transformation based on a face orientation determined by the face orientation determining unit 150.

As shown in Fig. 15A, when the check face image 340 generated on the basis of a face orientation determined by the face orientation determining unit 150 is compared against the normalized face image 216, these two faces are relatively similar. Thus, the accuracy of face identification by the face identification unit 190 can be enhanced. On the other hand, as shown in Fig. 15B, when the registered face image 161 that has not been transformed is compared against the normalized face image 216, since these images respectively contain a frontal face and a right-facing face, individual portions of the faces on the respective images are dissimilar, even through these faces belong to the same person. Thus, it is difficult to enhance the accuracy of face identification by the face identification unit 190 in comparison to the case shown in Fig. 15A.

Next, operation of the image processing apparatus 100 according to an embodiment of the present invention will be described with reference to the drawings.

Fig. 16 is a flowchart showing the processing steps of a face identification process performed by the image processing apparatus 100 according to an embodiment of the present invention.

First, the image capturing unit 112 generates a captured image (step S901). Subsequently, the face detection unit 120 performs a face detection process with respect to the generated captured image (step S902). Through this face detection process, it is determined whether or not a face has been detected (step S903), and if no face has been detected, operation of the face identification process is ended. On the other hand, if a face has been detected (step S903), the eye detection unit 130 performs an eye detection process with respect to the face detected by the face detection unit 120 (step S904).

Subsequently, the normalizing unit 140 performs normalization by adjusting a face image containing the face detected by the face detection unit 120 so that the positions of the eyes coincide with the reference positions 142 and 143 of the normalization template 141 (step S905). Subsequently, the face orientation determining unit 150 executes a face orientation determining process with respect to a normalized face image, which is the face image that has been normalized (step S920). This face orientation determining process will be described later in detail with reference to Fig. 17.

Subsequently, the image transformation unit 180 determines whether or not a face orientation determined by the face orientation determining unit 150 is frontal (step S906). If the face orientation determined by the face orientation determining unit 150 is not frontal (step S906), the image transformation unit 180 projects a registered face image stored in the registered face image storing unit 160 onto the three-dimensional model (step S907). Subsequently, the image transformation unit 180 rotates and translates the three-dimensional model 300 with the registered face image pasted thereon, by using transformation data stored in the transformation data storing unit 181 in association with the face orientation determined by the face orientation determining unit 150 (step S908). Subsequently, the registered face image pasted on the three-dimensional model 300 that has been rotated and translated is projected onto a plane to generate a two-dimensional image (check face image) (step S909).

Subsequently, the face identification unit 190 compares the two-dimensional image generated by the image transformation unit 180, against the normalized face image generated by the normalizing unit 140 to determine whether or not the face in this normalized face image is the face of the same person as the face in the registered face image (step S910). That is, a face identification process is performed with respect to the face detected by the face detection unit 120. In a case where a plurality of registered face images are stored in the registered face image storing unit 160, two-dimensional images are generated with respect to the individual registered face images, and the face identification process is performed with respect to each of the two-dimensional images.

If the face orientation determined by the face orientation determining unit 150 is frontal (step S906), the face identification unit 190 compares the registered face image stored in the registered face image storing unit 160, against the normalized face image generated by the normalizing unit 140. Then, the face identification unit 190 determines whether or not the face in this normalized face image is the face of the same person as the face in the registered face image (step S910). In a case where a plurality of registered face images are stored in the registered face image storing unit 160, the face identification process is performed with respect to each of the registered face images.

Fig. 17 is a flowchart showing the processing steps of a face orientation determining process performed by the image processing apparatus 100 according to an embodiment of the present invention. This face orientation determining process is a process corresponding to the face orientation determining process in step S920 in Fig. 16.

First, the score S is initialized to "0" (step S921), and the variable i is initialized to "0" (step S922). Subsequently, from among luminance values extracted from a normalized face image, the luminance value A(i) corresponding to the Coordinate 0(x, y) 152 of Reference Data i in the face-orientation-determination-reference-data holding unit 151, and the luminance value B(i) corresponding to the Coordinate 1(x, y) 153 are acquired (step S923). Subsequently, the difference C(i) between the respective acquired luminance values is calculated by using the following equation (step S924).

$$C(i) = A(i) - B(i)$$

Subsequently, the calculated value C(i) of the difference between the respective luminances, and the value of the threshold (m) 154 contained in Reference Data i in the face-orientation-determination-reference-data holding unit 151 are compared against each other to determine whether or not the calculated value C(i) is larger than the value of the threshold (m) 154 (step S925). If the calculated value C(i) is equal to or smaller than the value of the threshold (m) 154 (step S925), the value of the weight (r) 155 contained in Reference Data i in the face-orientation-determination-reference-data holding unit 151 is added to the score S (step S926). On the other hand, if the calculated value C(i) is larger than the value of the threshold (m) 154 (step S925), the value of the weight (r) 155 contained in Reference Data i in the face-orientation-determination-reference-data holding unit 151 is not added to the score S, and the process proceeds to step S927.

Subsequently, "1" is added to the variable i (step S927), and it is determined whether or not the variable i is larger than n - 1 (step S928). If the variable i is not larger than n - 1 (step S928), the determination process has not been finished with respect to each reference data in the face-orientation-determination-reference-data holding unit 151, so the process returns to step S923, and the determination process is repeated (steps S923 to S927). On the other hand, if the variable i is larger than n - 1 (step S928), it is determined whether or not the value of the score S falls between Threshold 1 and Threshold 2 (step S929). Threshold 1 corresponds to the threshold 156 shown in Fig. 5B, and Threshold 2 corresponds to the threshold 157 shown in Fig. 5B.

If the value of the score S falls between Threshold 1 and Threshold 2 (step S929), it is determined that the orientation of a face contained in a normalized face image is "frontal" (step S930).

If the value of the score S does not fall between Threshold 1 and Threshold 2 (step S929), it is determined whether or not the value of the score S is larger than Threshold 2 (step S931). If the value of the score S is larger than Threshold 2 (step S931), it is determined that the face contained in the normalized face image is "right-facing" (step S932). On the other hand, if the value of the score S is smaller than Threshold 2 (step S931), it is determined that the face contained in the normalized face image is "left-facing" (step S933). Step S907 represents an example of a projecting step described in the claims. Step S908 represents an example of a transforming step described in the claims. Step S909 represents an example of a generating step described in the claims. Step S910 represents an example of an identifying step described in the claims.

The foregoing description is directed to the example in which a registered face image is transformed into a check face image by performing computations using the matrices F to K in Equation (1). That is, in the computations using the matrices F to K in Equation (1), the three-dimensional coordinate origin in the three-dimensional model 300 with a registered face image pasted on its surface is set as the midpoint of the bend line of the three-dimensional model 300, and rotation and translation are performed with this three-dimensional coordinate origin as a reference. In a case where the midpoint of the bend line is set as the three-dimensional coordinate origin in this way, after performing yaw rotation of the three-dimensional model 300, it is necessary to perform roll rotation and parallel translation along the y-axis for effecting normalization with reference to the positions of the eyes.

Here, a registered face image is an image that has been normalized with reference to the positions of the eyes. Thus, for example, when the midpoint of the line segment connecting the eyes of a face contained in a registered face image pasted on the surface of the three-dimensional model 300 is set as the three-dimensional coordinate origin, roll rotation and parallel translation along the y-axis can be omitted. This allows for a reduction in the amount of computation in comparison to the case of performing computations using the matrices F to K in Equation (1). In the following, with reference to the drawings, a detailed description will be given of an example in which image transformation is performed by setting, as the three-dimensional coordinate origin, the midpoint of the line segment connecting the eyes in the three-dimensional model 300, thereby omitting roll rotation and parallel translation along the y-axis.

Fig. 18 is a block diagram showing a functional configuration example of an image processing apparatus 500 according to an embodiment of the present invention. Here, the image processing apparatus 500 represents a partial modification of the image processing apparatus 100 shown in Fig. 1, and has an image transformation unit 510 and a transformation data storing unit 520, instead of the image transformation unit 180 and the transformation data storing unit 181. Thus, a detailed description will not be given of components similar to those of the image processing apparatus 100 shown in Fig. 1. With regard to other components as well, the following description will focus on differences from the image processing apparatus 100 shown in Fig. 1.

The image transformation unit 510 generates a two-dimensional image from a registered face image stored in the registered face image storing unit 160, by using transformation parameters that are stored in the transformation data storing unit 520 in association with a face orientation determined by the face orientation determining unit 150.

The transformation data storing unit 520 stores transformation parameters used by the image transformation unit 510 to perform transformation, in association with a face orientation to be determined by the face orientation determining unit 150, and supplies the stored transformation parameters to the image transformation unit 510. The transformation data storing unit 520 will be described later in detail with reference to Fig. 19. A method of computing the transformation parameters stored in the transformation data storing unit 520 will be described later in detail with reference to Figs. 20A to 22B. The transformation data storing unit 520 represents an example of a transformation parameter storing unit described in the claims.

Fig. 19 is a diagram showing the contents of the transformation data storing unit 520 according to an embodiment of the present invention. In the transformation data storing unit 520, transformation parameters 523 are stored in association with Left-facing 521 and Right-facing 522.

The transformation parameters 523 are transformation parameters used by the image transformation unit 510 to transform a registered face image stored in the registered face image storing unit 160 to generate a check face image. Specifically, the transformation parameters 523 are transformation parameters used for projecting a registered face image onto the surface of a three-dimensional model, transforming the three-dimensional model on the basis of the face orientation determination result, and projecting the registered face image on the transformed three-dimensional model onto a plane to generate a check face image. When projecting the registered face image onto the surface of the three-dimensional model, the registered face image is projected in such a way that the bend line of the three-dimensional model stored in the three-dimensional model storing unit 170 substantially coincides with the centerline with respect to the horizontal direction of a face contained in the registered face image. When transforming the three-dimensional model, the three-dimensional model is rotated and translated with reference to the midpoint of the line segment connecting the eyes of a face contained in the registered face image pasted on the surface of the three-dimensional model, in such a way that the positions of the eyes become specific positions.

Here, when a face orientation is determined to be either "left-facing" or "right-facing" by the face orientation determining unit 150, the image transformation unit 510 transforms the registered face image into a two-dimensional image by using transformation parameters stored in association with the determined face orientation (Left-orientation 521 or Right-orientation 522). This transformation uses transformation parameters according to "$x < 0$" and "$x \geq 0$", with the center position of the registered face image taken as the coordinate origin. The registered face image is transformed into the two-dimensional image with the center position of the two-dimensional image taken as the coordinate origin. A method of calculating transformation parameters A to E will be described later in detail with reference to Figs. 20A to 22B.

Figs. 20A to 22B are diagrams schematically showing a calculation method for calculating the transformation parameters A to E according to an embodiment of the present invention. In the following description, elements that are the same as those of the above-described images and the like are denoted by the same reference numerals.

As shown in Fig. 20A, in a case where the center position 02 of the registered face image 161 is taken as the origin, the positions of the eyes of the face 241 contained in the registered face image 161 are the positions 242 and 243. The positions 242 and 243 are, for example, the center positions of the eyes of the face 241. Let (-p, q) be the coordinate of the position 242, and (p, q) be the coordinate of the position 243 in this case. Here, by using the inverse matrix $F^{-1}$ of the matrix F and the inverse matrix $G^{-1}$ of the matrix G in Equation (1), as shown in Fig. 20B, the registered face image 161 can be projected onto the three-dimensional model 300 for yaw rotation. Then, a case in considered in which, letting OL2 (XL, YL, ZL) be the coordinate of the left eye of the face in the registered face image three-dimensional model 330 after this yaw rotation, and OR2 (XR, YR, ZR) be the coordinate of the right eye, the coordinates OL2 and OR2 are obtained. It should be noted, however, that this example is directed to an example in which coordinates OL2 and OR2 are obtained while assuming a case where the coordinate origin in three-dimensional space is changed from a point 03 shown in Fig. 20B to a reference point K1 shown in Figs. 21A and 21B. In the case where the reference point K1 is taken as the coordinate origin in this way, the coordinate OL2 (XL, YL, ZL) of the left eye can be calculated by using Equation (2). The coordinate OR2 (XR, YR, ZR) of the right eye can be calculated by using Equation (3).

$$\begin{pmatrix} XL \\ YL \\ ZL \\ 1 \end{pmatrix} = \begin{pmatrix} -p\cos\theta - p\tan\alpha\sin\theta \\ q \\ p\sin\theta - p\tan\alpha\cos\theta + Z_c \\ 1 \end{pmatrix} \quad \cdots(2)$$

$$\begin{pmatrix} XR \\ YR \\ ZR \\ 1 \end{pmatrix} = \begin{pmatrix} p\cos\theta - p\tan\alpha\sin\theta \\ q \\ -p\sin\theta - p\tan\alpha\cos\theta + Z_c \\ 1 \end{pmatrix} \quad \cdots(3)$$

As shown in Fig. 20C, in a case where the center position 05 of the check face image 340 is taken as the origin, the positions of the eyes of the face 341 contained in the check face image 340 are the positions 342 and 343. The positions 342 and 343 are, for example, the center positions of the eyes of the face 341. Since the check face image 340 is an image that has been normalized with reference to the positions of the eyes, the coordinates of the positions 342 and 343 in this case becomes the same as the coordinates of the positions 242 and 243 of the eyes contained in the registered face image 161. Accordingly, Let (-p, q) be the coordinate of the right eye, and (p, q) be the coordinate of the left eye in the check face image 340. Here, assuming a case where the coordinate origin in three-dimensional space is changed from the point O5 shown in Fig. 20C to the reference point K1 shown in Figs. 21A and 21B, a description will be given of an example in which the coordinate (-p, q) of the right eye and the coordinate (p, q) of the left eye are obtained. In the case where the reference point K1 is taken as the coordinate origin in this way, on the basis of the positional relationship shown in Figs. 21A and 21B, the coordinate (-p, q) of the right eye can be calculated by using Equation (4). The coordinate (p, q) of the left eye can be calculated by using Equation (5).

$$\begin{pmatrix} -p \\ q \end{pmatrix} = \begin{pmatrix} f\,\dfrac{XL+T_x}{ZL+T_z} \\ f\,\dfrac{XL+T_y}{ZL+T_z} \end{pmatrix} \quad \cdots(4)$$

$$\begin{pmatrix} p \\ q \end{pmatrix} = \begin{pmatrix} f \dfrac{XR+T_x}{ZR+T_z} \\ f \dfrac{XR+T_y}{ZR+T_z} \end{pmatrix} \quad \cdots(5)$$

Here, in a case where the middle position of the line segment connecting the eyes of a face contained in each of the registered face image 161 and the registered face image three-dimensional model 330 is taken as the origin, q = 0. Accordingly, let Ty = 0. By substituting Equation (2) and Equation (3) into Equation (4) and Equation (5), parallel translation components Tx, Ty, and Tz can be obtained as follows.

$$Tx = p\sin\theta(\tan\alpha - (p/f)) \quad \ldots (6)$$

$$Ty = 0 \quad \ldots (7)$$

$$Tz = (f + p\tan\alpha)\cos\theta - Zc \quad \ldots (8)$$

Here, in a case where the middle position between the eyes of the face in the registered face image three-dimensional model 330 is taken as the coordinate origin, as described above, parallel translation of Ty and roll rotation can be omitted.
Here, as for the three-dimensional coordinate prior to yaw rotation, which is obtained after the coordinate origin on the registered face image 161 is changed to the center point and the registered face image 161 is projected onto the surface of the three-dimensional model 300, if $x_c \geq 0$, then, referring to Fig. 22B, zl = -x1tanα. Thus, the three-dimensional coordinate prior to yaw rotation after the registered face image 161 is projected can be represented as a coordinate ($x_c$, $y_c$, $-x_c\tan\alpha$). It should be noted, however, that $x_c$ and $y_c$ are defined as follows.

$$x_c = x + Cx$$

$$y_c = y + Cy$$

Cx and Cy are the same as the values shown in Fig. 10A. In this case, Equation (9) below holds with respect to the three-dimensional coordinate ($x_c$, $y_c$, $-x_c\tan\alpha$).

$$\begin{pmatrix} x_c \\ y_c \\ -x_c \tan\alpha \end{pmatrix} = \begin{pmatrix} \cos\theta & 0 & -\sin\theta \\ 0 & 1 & 0 \\ \sin\theta & 0 & \cos\theta \end{pmatrix} \begin{pmatrix} \frac{u_c(Z+Z_c)}{f} - T_x \\ \frac{v_c(Z+Z_c)}{f} \\ Z - T_z \end{pmatrix} \cdots (9)$$

Here, the matrix on the left hand side of the right term of Equation (9) is a matrix for performing yaw rotation of the three-dimensional model in three-dimensional space. Like the matrix G, this matrix is a matrix for performing yaw rotation by the rotation angle θ. The matrix on the right hand side of the right term of Equation (9) is a matrix indicating a three-dimensional coordinate obtained after performing yaw rotation of the three-dimensional model in three-dimensional space. It should be noted, however, that $u_c$ and $v_c$ are defined as follows. Cu and Cv are the same as the values shown in Fig. 12.

$$u_c = u - Cu$$

$$v_c = v - Cv$$

Subsequently, expanding the matrices in Equation (9) yields Equations (10) to (12) below.

$$x_c = (u_c/f)Z\cos\theta + (u_c/f)Zc\cos\theta - Tx\cos\theta - Z\sin\theta + Tz\sin\theta \ \ldots \ (10)$$

$$y_c = (v_c/f)Z + (v_c/f)Zc \ \ldots \ (11)$$

$$-x_c\tan\alpha = (u_c/f)Z\sin\theta + (u_c/f)Zc\sin\theta - Tx\sin\theta + Z\cos\theta - Tz\cos\theta \ \ldots \ (12)$$

In a case where the middle position between the eyes in the registered face image three-dimensional model 330 is taken as an origin 07, the value of Z can be obtained by Equation (13) below.

$$Z = -(x\cos\theta - x_c\tan\alpha\sin\theta)\tan(\alpha + \theta) + Tz \ \ldots \ (13)$$

Here, substituting Tz in Equation (8) described above into Equation (13) yields Equation (14) below.

$$Z = -x_c(\cos\theta - \tan\alpha\sin\theta)\tan(\alpha + \theta) + (f + p\tan\alpha)\cos\theta - Zc \ \ldots \ (14)$$

Subsequently, by substituting Tx in Equation (6), Tz in Equation (8), and Z in Equation (14) into Equation (10) and Equation (11), $x_c$ and $y_c$ when $x_c \geq 0$ can be obtained as Equation (15) and Equation (16). Here, $x_c$, $y_c$, $u_c$ and $v_c$ shown in Equations (15) to (33) are simply represented as x, y, u, and v for the purpose of generalization.

$$x = \frac{u - \dfrac{fp\sin\theta(\tan\alpha - \frac{p}{f})}{(f + p\tan\alpha)\cos\theta}}{u\dfrac{(\cos\theta - \tan\alpha\sin\theta)\tan(\alpha+\theta)}{(f + p\tan\alpha)\cos\theta} + \dfrac{f\{1 + (\tan\alpha\sin\theta - \cos\theta)\tan(\alpha+\theta)\sin\theta\}}{(f + p\tan\alpha)\cos^2\theta}} \quad \cdots(15)$$

$$y = \left\{\frac{(\tan\alpha\sin\theta - \cos\theta)\tan(\alpha+\theta)}{f}x + \frac{(f + p\tan\alpha)\cos\theta}{f}\right\}v \quad \cdots(16)$$

Likewise, $x_c$ and $y_c$ when $x_c < 0$ can be obtained as Equation (17) and Equation (18).

$$x = \frac{u - \dfrac{fp\sin\theta(\tan\alpha - \frac{p}{f})}{(f + p\tan\alpha)\cos\theta}}{u\dfrac{(-\cos\theta - \tan\alpha\sin\theta)\tan(\alpha-\theta)}{(f + p\tan\alpha)\cos\theta} + \dfrac{f\{1 + (\tan\alpha\sin\theta + \cos\theta)\tan(\alpha-\theta)\sin\theta\}}{(f + p\tan\alpha)\cos^2\theta}} \quad \cdots(17)$$

$$y = \left\{\frac{(\tan\alpha\sin\theta + \cos\theta)\tan(\alpha-\theta)}{f}x + \frac{(f + p\tan\alpha)\cos\theta}{f}\right\}v \quad \cdots(18)$$

Subsequently, $x_c$ and $y_c$ shown in Equations (15) to (18) can be modified by using Equations (19) to (21) below. The modified equations are represented as Equations (22) to (25).

$$\tan(\alpha + \theta) = (\tan\alpha + \tan\theta/(1 - \tan\alpha\tan\theta) \quad \ldots (19)$$

$$\tan(\alpha - \theta) = (\tan\alpha - \tan\theta/(1 + \tan\alpha\tan\theta) \quad \ldots (20)$$

$$1/\cos^2\theta = 1 + \tan^2\theta \quad \ldots (21)$$

$x \geq 0$

$$x = \frac{u - \dfrac{(f\ p\tan\alpha - p^2)\sin\theta}{(f + p\tan\alpha)\cos\theta}}{u\dfrac{\tan\alpha + \tan\theta}{f + p\tan\alpha} + \dfrac{f - f\tan\alpha\sin\theta}{f + p\tan\alpha}} \quad \cdots(22)$$

$$y = \left(\frac{(\tan\alpha + \tan\theta)\cos\theta}{f}\ x + \frac{f + p\tan\alpha}{f}\right) v \quad \cdots(23)$$

$x < 0$

$$x = \frac{u - \dfrac{(f\ p\tan\alpha - p^2)\sin\theta}{(f + p\tan\alpha)\cos\theta}}{u\dfrac{-\tan\alpha + \tan\theta}{f + p\tan\alpha} + \dfrac{f + f\tan\alpha\sin\theta}{f + p\tan\alpha}} \quad \cdots(24)$$

$$y = \left(\frac{(\tan\alpha - \tan\theta)\cos\theta}{f}\ x + \frac{f + p\tan\alpha}{f}\right) v \quad \cdots(25)$$

Here, Equations (22) and (23) indicate $x_c$ and $y_c$ when $x_c \geq 0$, and Equations (24) and (25) indicate $x_c$ and $y_c$ when $x_c < 0$. Here, f, p, $\alpha$, and $\theta$ other than the variables u and v can be set as fixed values. For example, $\alpha$ and $\theta$ can be set such that $\alpha$ = 10 to 20 and $\theta$ = -30 to -20 or 20 to 30. In the embodiment of the present invention, a registered face image is transformed in accordance with "left-facing" or "right-facing" determined by the face orientation determining unit 150. Accordingly, assuming the case of "left-facing" or "right-facing" ($\theta \geq 0$ or $\theta < 0$), Equations (26) to (33) below can be calculated.

(a) Left-facing ($\theta \geq 0$) $x \geq 0$

$$x = \frac{u - A}{B_0 u + C_0} \quad \cdots(26)$$

$$y = (D_0 x + E)\, v \quad \cdots(27)$$

(b) Left-facing ($\theta \geq 0$) $x < 0$

$$x = \frac{u - A}{B_1 u + C_1} \quad \cdots(28)$$

$$y = (D_1 x + E)\, v \quad \cdots(29)$$

(c) Right-facing ( θ < 0 ) x ≥ 0

$$x = \frac{u + A}{-B_1 u + C_1} \quad \cdots(30)$$

$$y = (-D_1 x + E)\, v \quad \cdots(31)$$

(d) Right-facing (θ < 0) x < 0

$$x = \frac{u + A}{-B_0 u + C_0} \quad \cdots(32)$$

$$y = (-D_0 x + E)\, v \quad \cdots(33)$$

Here, $A_0$, $B_0$, $B_1$, $C_0$, $C_1$, Do, $D_1$ and E are values stored in the transformation data storing unit 520 in Fig. 19, and take the following values.

$$A = \frac{(f\ \ p \tan\alpha - p^2)\sin\theta}{(f + p\tan\alpha)\cos\theta}$$

$$B_0 = \frac{\tan\alpha + \tan\theta}{f + p\tan\alpha}$$

$$B_1 = \frac{-\tan\alpha + \tan\theta}{f + p\tan\alpha}$$

$$C_0 = \frac{f - f\tan\alpha\sin\theta}{f + p\tan\alpha}$$

$$C_1 = \frac{f + f\tan\alpha\sin\theta}{f + p\tan\alpha}$$

$$D_0 = \frac{(-\tan\alpha - \tan\theta)\cos\theta}{f}$$

$$D_1 = \frac{(\tan\alpha - \tan\theta)\cos\theta}{f}$$

$$E = \frac{f + p\tan\alpha}{f}$$

In this way, the transformation parameters 523 stored in the transformation data storing unit 520 are calculated in advance, and the image transformation unit 510 can generate a two-dimensional image from a registered face image by using the values of the transformation parameters 523. That is, with the center position of the registered face image taken as the origin, and the center position of the two-dimensional image taken as the origin, a coordinate (x, y) in the registered face image is transformed into a coordinate (u, v) in the two-dimensional image. This makes it possible to reduce the amount of computation in comparison to the case in which the three-dimensional coordinate origin in the three-dimensional model 300 having a registered face image pasted on its surface is set as the midpoint of the bend line. This enables a significant reduction in the processing load at the time of the face identification process. Thus, the face identification function can be easily incorporated into compact digital still cameras, mobile telephones, and the like.

Fig. 23 is a diagram showing a face identification result graph 600 summarizing the face identification results outputted from the face identification unit 190 according to an embodiment of the present invention. The face identification result graph 600 is a graph summarizing the face identification results in a case where image transformation was performed by the image transformation unit 180 on the basis of the result of determination by the face orientation determination unit 150, and in a case where image transformation by the image transformation unit 180 was not performed. Here, a case is shown in which, when $\alpha$ = 15 degrees, and $\theta$ = -30 or 30 degrees, face identification was performed using a plurality of captured images captured while changing the actual face orientation angle, with respect to the faces of 10 men and women.

Here, in the face identification result graph 600, the horizontal axis indicates the value of the actual orientation angle of a face contained in a captured image, and the vertical axis indicates a value obtained by summing up and then averaging the scores of face identification results outputted by the face identification unit 190. It is assumed that a face identification threshold 601 for determining whether or not a face is a registered face on the basis of the calculated score of face identification result is set within the range of 0 to 10000. Further, in this example, the face orientation angle when a face contained in a captured image is frontal is set as 90 degrees. The angle at or below which a face is determined to be left-facing by the face orientation determining unit 150 is set to 77 degrees. The angle at or above which a face is determined to be right-facing by the face orientation determining unit 150 is set to 113 degrees.

A line 611 indicates values obtained with respect to individual captured images by summing up and then averaging the scores of face identification results calculated when face identification was performed after performing image transformation by the image transformation unit 180 on the basis of the results of determination by the face orientation determining unit 150. On the other hand, a line 612 indicates values obtained with respect to individual captured images by summing up and then averaging the scores of face identification results calculated when face identification was performed without performing image transformation by the image transformation unit 180.

As indicated by the face identification result graph 600, there is hardly any difference between the lines 611 and 612 when the orientation of a face is close to frontal (between vertical lines 603 and 604). However, upon exceeding an angle beyond which a face is determined to be left-facing or right-facing by the face orientation determining unit 150 (on the left side with respect to the vertical line 603 or on the right side with respect to the vertical line 604), as indicated by, for example, difference values 621 to 624, the difference value between the lines 611 and 612 becomes large. That is, by applying the embodiment of the present invention, the accuracy of face identification can be enhanced also with respect to a captured image containing a face that is facing in an oblique direction. While this example is directed to the case in which face identification is performed by using a pre-recorded captured image, accuracy can be similarly enhanced with respect to face identification for a captured image performed at the time of image capture by an image capturing apparatus such as a digital still camera.

Next, operation of the image processing apparatus 500 according to an embodiment of the present invention will be described with reference to the drawings.

Fig. 24 is a flowchart showing the processing steps of a face identification process performed by the image processing apparatus 500 according to an embodiment of the present invention. The processing steps represent a modification of the processing steps shown in Fig. 16, and steps S901 to S906, S910, S911, and S920 shown in Fig. 24 represent the same processing steps as steps S901 to S906, S910, S911, and S920 shown in Fig. 16. Thus, description of the same processing steps will be omitted.

If a face orientation determined by the face orientation determining unit 150 is not frontal (step S906), the image transformation unit 510 generates a two-dimensional image (check face image) on the basis of the face orientation determined by the face orientation determining unit 150 (step S950). That is, the image transformation unit 510 transforms a registered face image stored in the registered face image storing unit 160 to generate a two-dimensional image (check face image), by using transformation parameters stored in the transformation data storing unit 520 in association with the face orientation determined by the face orientation determining unit 150.

Figs. 25A to 25D are diagrams each showing an example of three-dimensional model according to an embodiment of the present invention. While the foregoing description is directed to the example in which image transformation is performed by using the three-dimensional model 300, as shown in Figs. 25A to 25D, image transformation may be performed by using other three-dimensional models.

A three-dimensional model 700 shown in Fig. 25A is a three-dimensional CG model having a shape obtained by forming two bend lines near the middle of a rectangle with respect to the horizontal direction, and bending the rectangle at either end toward the back side. A three-dimensional model 710 shown in Fig. 25B is a three-dimensional CG model having a cylindrical shape. A three-dimensional model 720 shown in Fig. 25C is a three-dimensional CG model having a spherical shape. A three-dimensional model 730 shown in Fig. 25D is a three-dimensional CG model having a cylindrical shape with a protrusion 731 formed on its surface. As for the three-dimensional model 730, for example, the protrusion 731 is preferably formed on the cylindrical shape in such a way that the portion of the nose of a face contained in a registered face image is projected onto the protrusion 731. Other than the three-dimensional models shown in Figs. 25A to 25D, for example, a three-dimensional model having the shape of an elliptical sphere may be used to perform image transformation. In this way, according to the embodiment of the present invention, image transformation can be performed by using a three-dimensional model that has a shape in which at least a part of the three-dimensional model in the horizontal direction on the surface onto which an image is to be projected is bent to the front side. Thus, when generating a two-dimensional image according to a face orientation with respect to the face of a person which is raised at the middle portion including the nose and the like, a face facing sideways close to the face of the person can be generated.

Image transformation may be also performed by using the three-dimensional model 300 in which $\alpha = 0$, for example. That is, image transformation may be performed by using a three-dimensional model having a substantially planar shape. Alternatively, image transformation may be performed by using a three-dimensional model that has a shape in which at least a part of the three-dimensional model in the horizontal direction on the surface onto which an image is to be projected is bent to the back side. In this way, according to the embodiment of the present invention, image transformation of a registered face image can be performed by using a so-called three-dimensional simplified model (simplified polygon model).

As described above, according to the embodiment of the present invention, by using a three-dimensional model, a two-dimensional image (check face image) of the same orientation as the face image contained in a captured image can be generated from a registered face image, and this generated two-dimensional image and a normalized face image can be compared and checked against each other. Thus, at the time of the identification process by the face identification unit 190, the orientations of faces contained in two images to be compared against each other become the same, thereby making it possible to enhance the accuracy of face identification. In addition, at the time of the identification process, a two-dimensional image of the same orientation as the face image contained in a captured image can be generated from a registered face image. Therefore, it suffices to register only one frontal registered face image with respect to each person. This allows for a reduction in the storage size of registered face images.

When performing image transformation on a registered face image, a simplified geometric model is used, thereby making it possible to achieve a significant reduction in the amount of necessary computation in comparison to a case in which image transformation is performed by using a standard three-dimensional face model according to the related art. This enables implementation also on mobile devices and the like capable of a relatively limited amount of computation, such as mobile telephones and digital still cameras.

Here, a case is considered in which, instead of transforming a registered face image on the basis of a determined face orientation, a face image contained in a captured image is transformed into a frontal image to perform face identification. For example, if a face contained in the face image is a right-facing face, the right-side portion of the face is not contained in the face image. Hence, if the face image is transformed into a frontal face, there is a great possibility that accurate image transformation may not be performed on the right-side portion contained in the transformed frontal face. In particular, organs such as the eyes, mouth, and the like of a face are important for face identification. If these organs are not contained in the face image, there is a great possibility that accurate image transformation may not be performed on those organs contained in the transformed frontal face, resulting in a decrease in the accuracy of face identification. In contrast, according to the embodiment of the present invention, a check face image is generated from a registered face image containing a frontal face, allowing accurate image transformation to be performed on the organs such as the eyes and mouth of the face. This allows for enhanced accuracy of face identification.

While the embodiment of the present invention is directed to the example in which the face orientation determining unit 150 determines a face orientation by classifying the face orientation into "frontal", "right-facing", and "left-facing", the embodiment of the present invention is also applicable to a case in which the face orientation determining unit 150 determines a face orientation by classifying the face orientation into four or more orientations. Also, while the embodiment of the present invention is directed to the example in which the face orientation determining unit 150 determines the orientation of a face with respect to the lateral direction, the embodiment of the present invention is also applicable to a case in which the face orientation determining unit 150 determines the orientation of a face with respect to the vertical direction. In this case, image transformation can be performed by using, for example, a three-dimensional model that has a shape in which at least a part of the three-dimensional model in the vertical direction on the surface onto which an image is to be projected is bent to the front side.

The embodiment of the present invention can be also applied to an image processing apparatus such as a device with a camera function such as a mobile telephone including a camcorder (camera and recorder) or an image capturing unit, or a PC (Personal Computer).

While the face of a person is exemplified as the face to be subject to face identification in the embodiment of the present invention, the embodiment of the present invention is also applicable to the case of identifying the face of another animal such as a mammal.

While a still captured image is exemplified as the target image to be subject to face identification in the embodiment of the present invention, the embodiment of the present invention is also applicable to a moving image. In the case of a moving image, for example, a face is detected for each stream, and face identification can be performed with respect to a face image containing this face. Also, a face may be detected for each GOP (Group of Pictures), or a face can be detected for each fixed interval within a stream.

It should be noted that the embodiment of the present invention is merely illustrative of an example of implementation of the present invention, and has correspondence to each of the invention-specifying matters in the claims as described above. It should be noted, however, that the present invention is not limited to the embodiment, and various modifications can be made without departing from the scope of the present invention.

The processing steps described with reference to the embodiment of the present invention may be grasped as a method having a series of these steps, or may be grasped as a program for causing a computer to execute a series of these steps and a recording medium that stores the program. As such a recording medium, for example, a CD (Compact Disc), an MD (MiniDisc), a DVD (Digital Versatile Disk), a memory card, a Blur-ray Disc (R), or the like may be used.

The present application contains subject matter related to that disclosed in Japanese Priority Patent Application JP 2008-152643 filed in the Japan Patent Office on June 11, 2008, the entire content of which is hereby incorporated by reference.

It should be understood by those skilled in the art that various modifications, combinations, sub-combinations and alterations may occur depending on design requirements and other factors insofar as they are within the scope of the appended claims or the equivalents thereof.

## Claims

1. An image processing apparatus comprising:

   a projecting unit that projects a registered face image containing at least a part of a face onto a surface of a three-dimensional model, which has a shape in which at least a part of the three-dimensional model in one direction on the surface onto which an image is to be projected is bent to a front side, so that a horizontal direction of the face contained in the registered face image substantially coincides with the one direction;
   a transforming unit that transforms the three-dimensional model on the basis of an orientation of a face contained in a target image;
   a generating unit that generates a two-dimensional image by projecting the registered face image projected on the surface of the three-dimensional model transformed by the transforming unit, onto a plane; and
   an identifying unit that identifies the face contained in the target image, by comparing the two-dimensional image generated by the generating unit against the target image.

2. The image processing apparatus according to Claim 1,
   wherein:

   the three-dimensional model has a shape in which both ends in the one direction are bent to a back side, with a part of the three-dimensional model in the one direction on the surface taken as a bend line; and
   the projecting unit projects the registered face image onto the surface of the three-dimensional model so that a centerline with respect to the horizontal direction of the face contained in the registered face image substantially coincides with the bend line.

3. The image processing apparatus according to Claim 1 or 2,
   wherein:

   the registered face image is a normalized image normalized on the basis of eyes of the face contained in the registered face image;
   the image processing apparatus further comprises
   an eye detection unit that detects eyes of the face contained in the target image, and
   a normalizing unit that normalizes the target image to generate a normalized target image, on the basis of the eyes detected by the eye detection unit;
   the transforming unit rotates and translates the three-dimensional model with reference to a midpoint of a line segment connecting the eyes of the face contained in the registered face image projected on the surface of the three-dimensional model, so that positions of eyes of a face contained in the two-dimensional image generated by the generating unit and positions of eyes of a face contained in the normalized target image become the same; and
   the identifying unit identifies the face contained in the target image, by comparing the two-dimensional image generated by the generating unit against the normalized target image.

4. The image processing apparatus according to any of Claims 1 to 3, further comprising:

   a transformation parameter storing unit that stores transformation parameters in association with a face orientation, the transformation parameters being used for
   projecting the registered face image onto the surface of the three-dimensional model so that the centerline with respect to the horizontal direction of the face contained in the registered face image substantially coincides with the bend line,
   rotating and translating the three-dimensional model with reference to the midpoint of the line segment connecting the eyes of the face contained in the registered face image projected on the surface of the three-dimensional model, so that the positions of the eyes of the face contained in the two-dimensional image generated by the generating unit and the positions of the eyes of the face contained in the normalized target image become the same, and
projecting the registered face image projected on the surface of the three-dimensional model that has been rotated and translated, onto a plane to generate a two-dimensional image for each face orientation,

wherein the generating unit generates the two-dimensional image from the registered face image by using the transformation parameters stored in association with the orientation of the face contained in the target image.

**5.** The image processing apparatus according to any of Claims 1 to 4, further comprising:

an organ detection unit that detects two organs of the face contained in the target image; and
a normalizing unit that normalizes the target image to generate a normalized target image, on the basis of the two organs detected by the organ detection unit, wherein
the transforming unit rotates and translates the three-dimensional model so that positions of two organs of a face contained in the two-dimensional image generated by the generating unit and positions of two organs of a face contained in the normalized target image become the same, and
the identifying unit identifies the face contained in the target image, by comparing the two-dimensional image generated by the generating unit against the normalized target image.

**6.** The image processing apparatus according to Claim 5, further comprising a transformation data storing unit that stores values of a rotation angle and a translation distance of the three-dimensional model in association with a face orientation,
wherein the transforming unit rotates and translates the three-dimensional model by using the values of the rotation angle and the translation distance which are stored in association with the orientation of the face contained in the target image.

**7.** The image processing apparatus according to any of Claims 1 to 6, wherein the identifying unit identifies the face contained in the target image by comparing, as an object of comparison with the target image, one of the registered face image determined on the basis of the orientation of the face contained in the target image, and the two-dimensional image generated by the generating unit, against the target image.

**8.** The image processing apparatus according to Claim 7, further comprising:

a registered face image storing unit that stores an image containing at least a part of a frontal face, as the registered face image; and
a determining unit that determines the orientation of the face contained in the target image,

wherein if it is determined by the determining unit that the orientation of the face contained in the target image is frontal, the identifying unit identifies the face contained in the target image by comparing the registered face image against the target image.

**9.** The image processing apparatus according to any of Claims 1 to 8, further comprising:

an image capturing unit that captures a subject to generate a captured image;
a face detection unit that detects a face contained in the captured image; and
a determining unit that determines an orientation of the face detected by the face detection unit,

wherein the identifying unit identifies the face contained in the captured image by comparing the two-dimensional image generated, by the generating unit against a face image containing the face detected by the face detection unit.

**10.** An image processing apparatus comprising:

a registered face image storing unit that stores a registered face image, which is a normalized face image containing at least a part of a face and normalized on the basis of eyes of the face;
a determining unit that makes a determination of an orientation of a face contained in a target image;
an eye detection unit that detects eyes of the face contained in the target image;
a normalizing unit that normalizes the target image to generate a normalized target image, on the basis of the eyes detected by the eye detection unit;

a transformation parameter storing unit that stores transformation parameters in association with a face orientation that is subject to the determination, the transformation parameters being used for

projecting the registered face image onto a surface of a three-dimensional model, which has a shape in which both ends in one direction on the surface onto which an image is to be projected are bent to a back side, with a part of the three-dimensional model in the one direction taken as a bend line, so that a centerline with respect to a horizontal direction of the face contained in the registered face image substantially coincides with the bend line,

rotating and translating the three-dimensional model so that positions of the eyes of the face contained in the registered face image projected on the surface of the three-dimensional model become specific positions, with reference to a midpoint of a line segment connecting the eyes, and

projecting the registered face image projected on the surface of the three-dimensional model that has been rotated and translated, onto a plane to generate a two-dimensional image for each face orientation that is subject to the determination;

an image transformation unit that generates the two-dimensional image from the registered face image by using the transformation parameters stored in association with the orientation of the face determined by the determining unit; and

an identifying unit that identifies the face contained in the target image, by comparing the two-dimensional image generated by the image transformation unit against the normalized target image.

**11.** An image processing method comprising the steps of:

projecting a registered face image containing at least a part of a face onto a surface of a three-dimensional model, which has a shape in which at least a part of the three-dimensional model in one direction on the surface onto which an image is to be projected is bent to a front side, so that a horizontal direction of the face contained in the registered face image substantially coincides with the one direction;

transforming the three-dimensional model on the basis of an orientation of a face contained in a target image;

generating a two-dimensional image by projecting the registered face image projected on the surface of the transformed three-dimensional model, onto a plane; and

identifying the face contained in the target image, by comparing the generated two-dimensional image against the target image.

FIG. 1

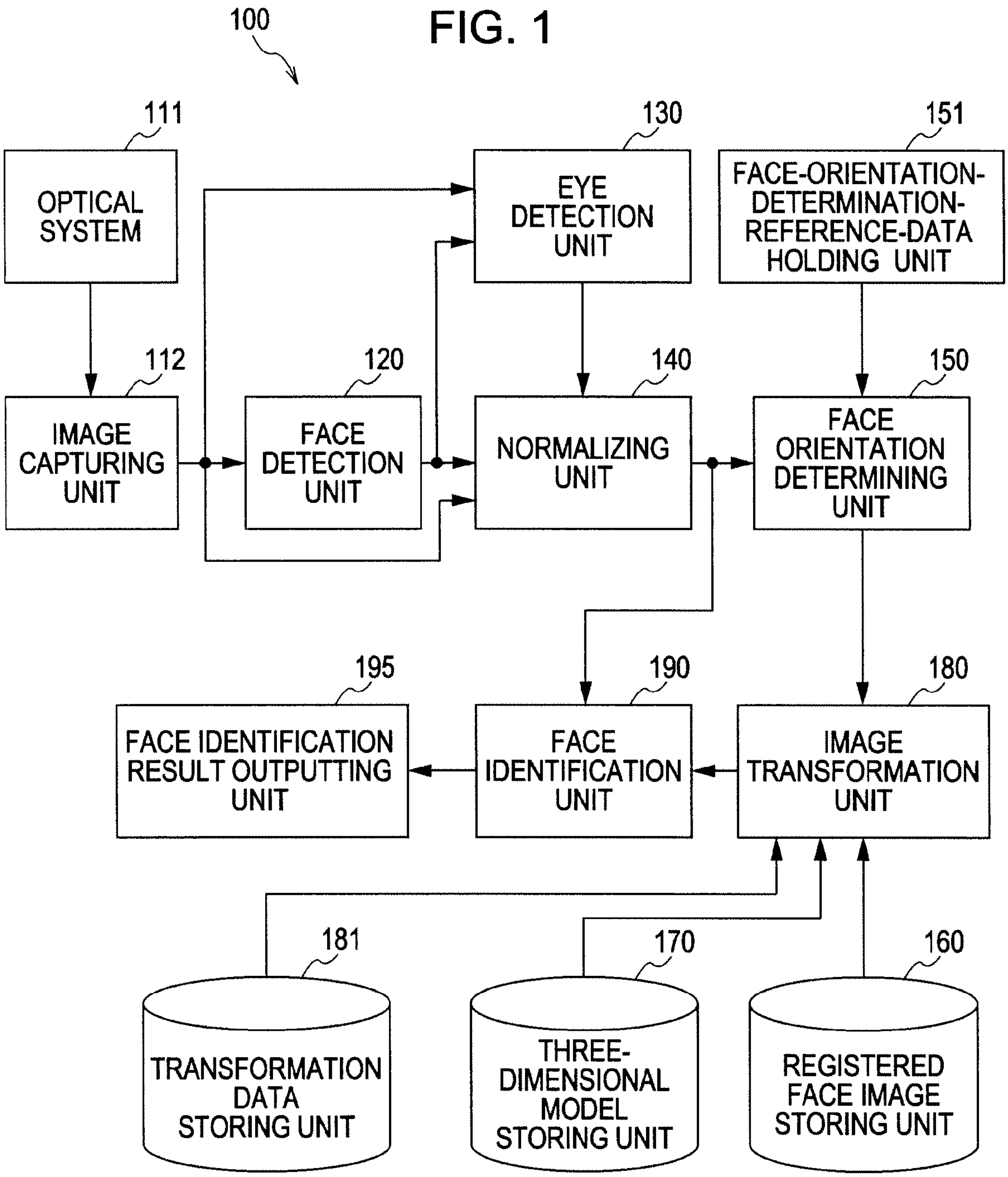
100
111
OPTICAL SYSTEM
112
IMAGE CAPTURING UNIT
120
FACE DETECTION UNIT
130
EYE DETECTION UNIT
140
NORMALIZING UNIT
151
FACE-ORIENTATION-DETERMINATION-REFERENCE-DATA HOLDING UNIT
150
FACE ORIENTATION DETERMINING UNIT
195
FACE IDENTIFICATION RESULT OUTPUTTING UNIT
190
FACE IDENTIFICATION UNIT
180
IMAGE TRANSFORMATION UNIT
181
TRANSFORMATION DATA STORING UNIT
170
THREE-DIMENSIONAL MODEL STORING UNIT
160
REGISTERED FACE IMAGE STORING UNIT

FIG. 2A

FIG. 2B

FIG. 2C

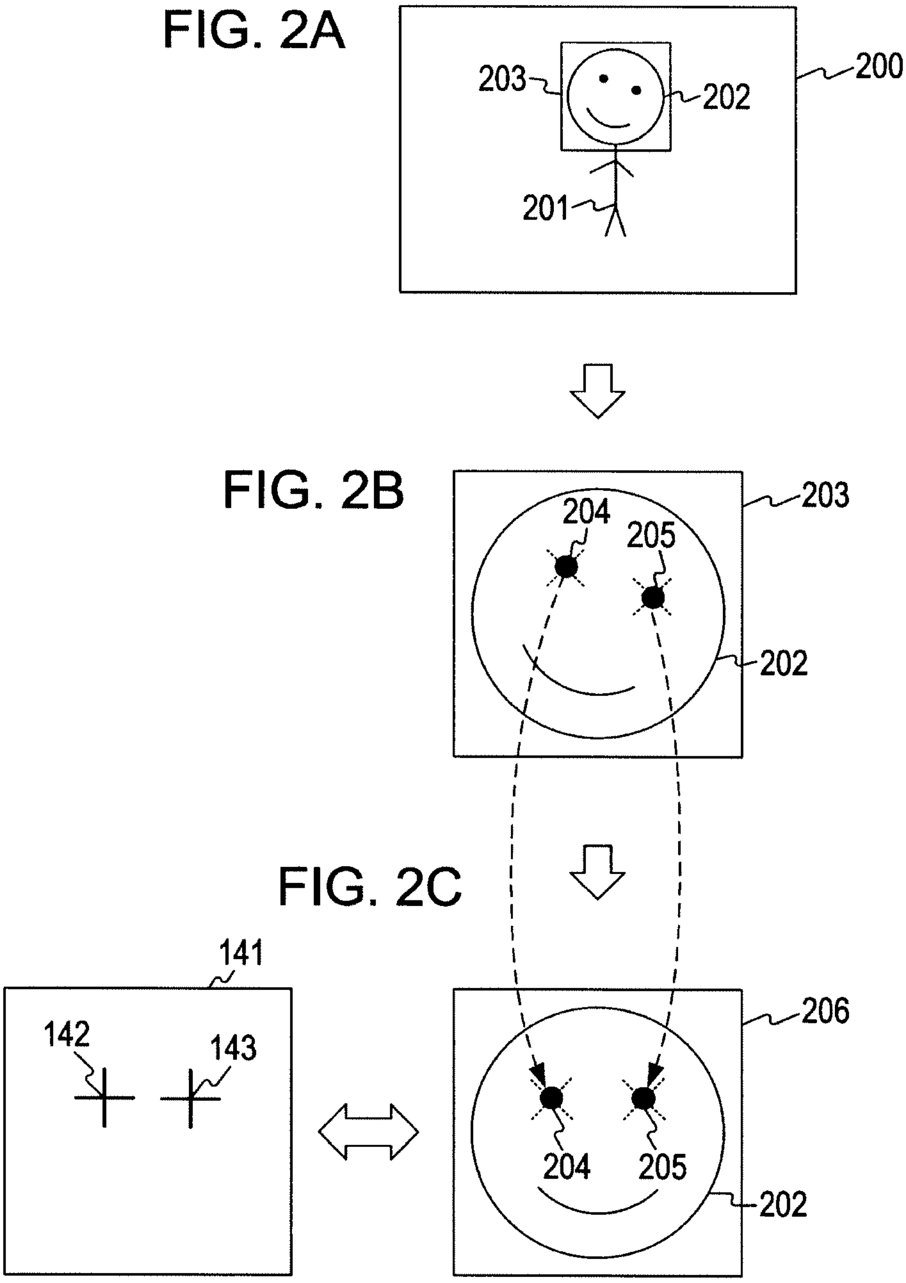

FIG. 3A

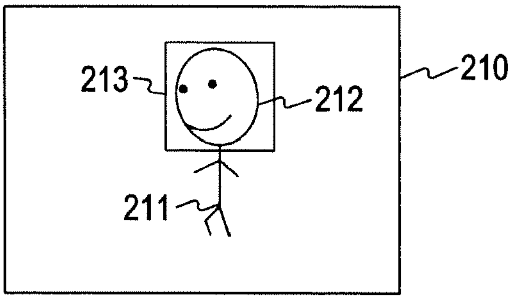


FIG. 3B

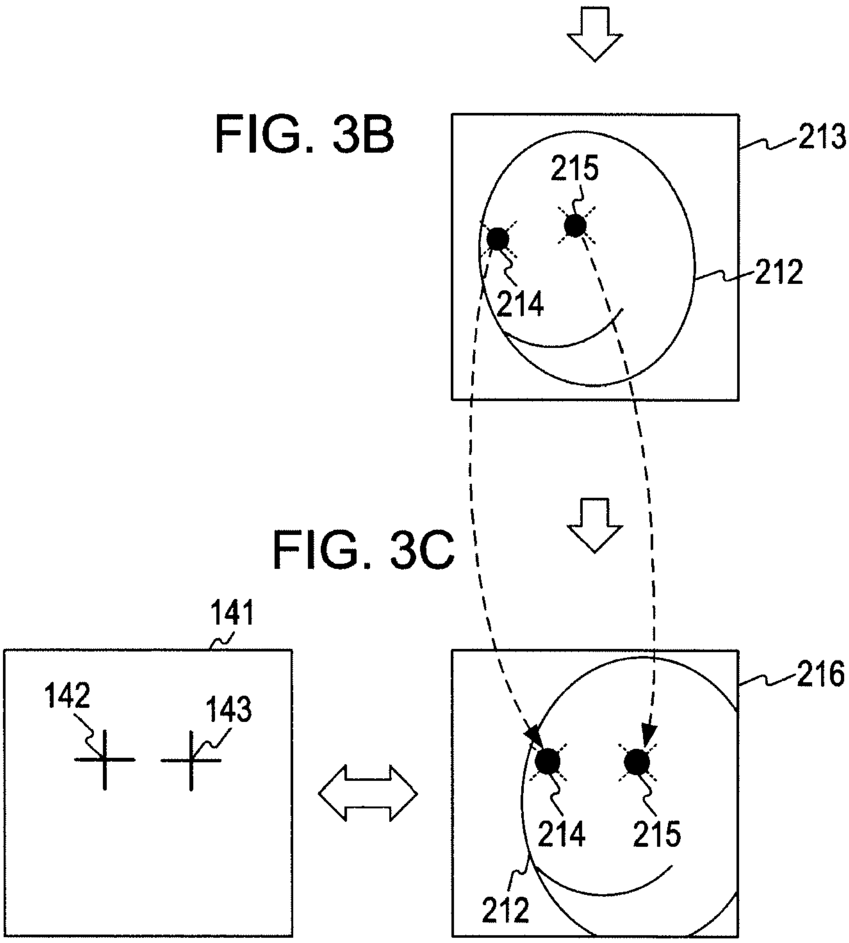


FIG. 3C

FIG. 4A

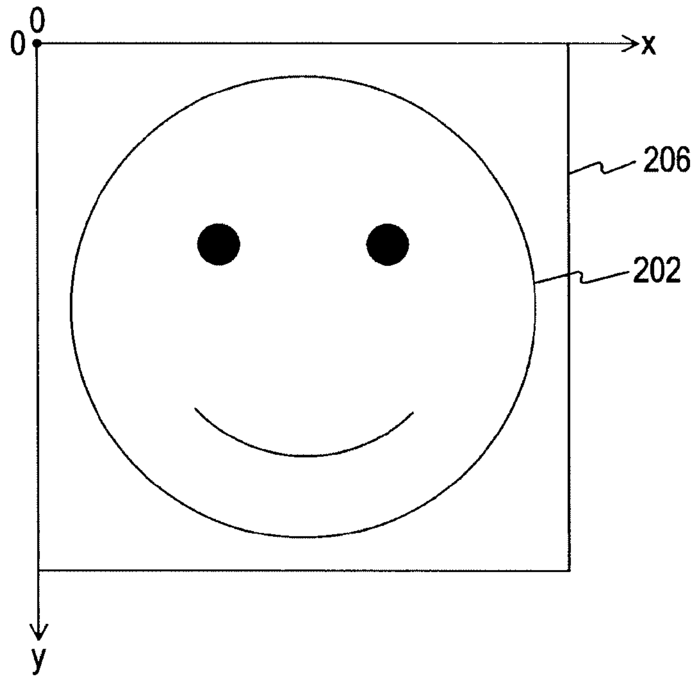


FIG. 4B

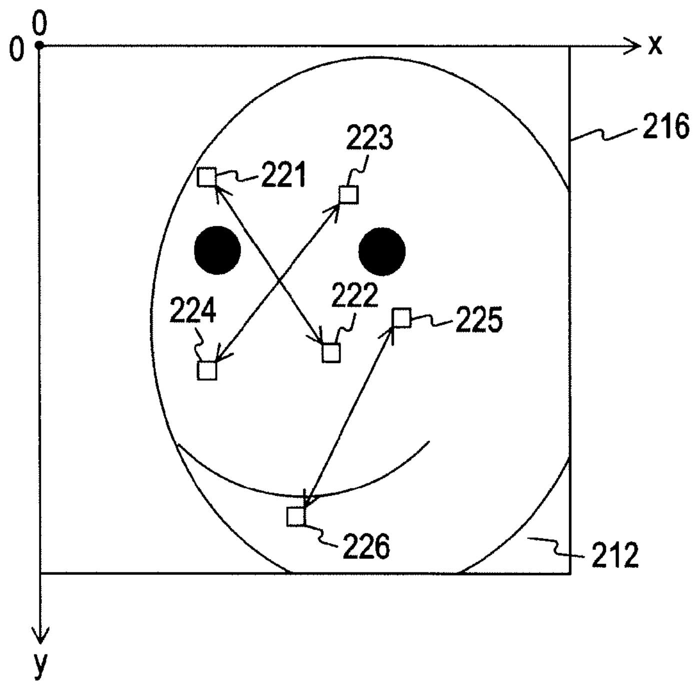

FIG. 5A

151

152 153 154 155

| | COORDINATE 0 OF NORMALIZED FACE IMAGE (x, y) | | COORDINATE 1 OF NORMALIZED FACE IMAGE (x, y) | | THRESHOLD OF LEVEL DIFFERENCE BETWEEN COORDINATES 0 AND 1 (m) | WEIGHT OF REFERENCE DATA (r) |
|---|---|---|---|---|---|---|
| | x | y | x | y | | |
| REFERENCE DATA 0 | ... | ... | ... | ... | ... | ... |
| REFERENCE DATA 1 | ... | ... | ... | ... | ... | ... |
| REFERENCE DATA 2 | ... | ... | ... | ... | ... | ... |
| ... | ... | ... | ... | ... | ... | ... |
| REFERENCE DATA n−1 | ... | ... | ... | ... | ... | ... |

FIG. 5B

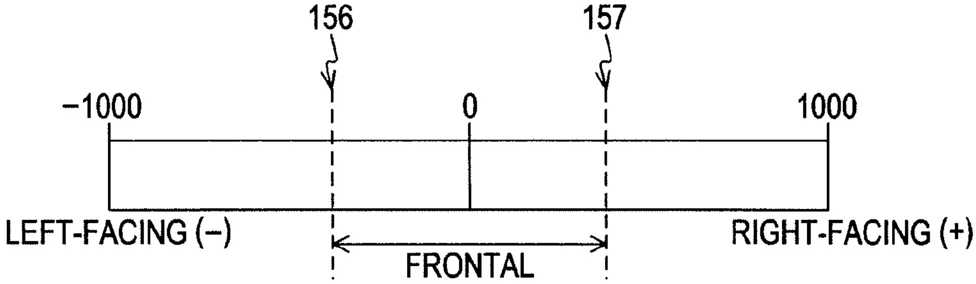

FIG. 6A

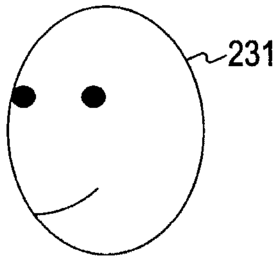


FIG. 6B

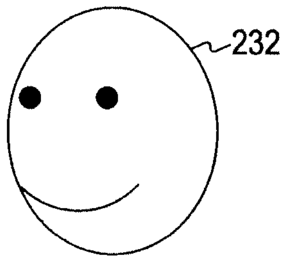


FIG. 6C

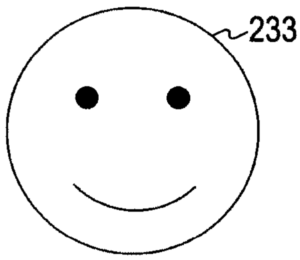


FIG. 6D

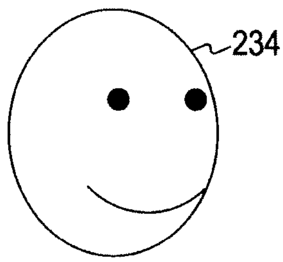


FIG. 6E

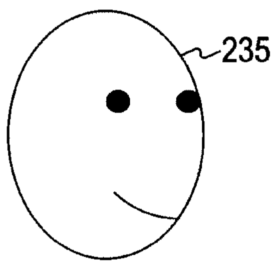

FIG. 7

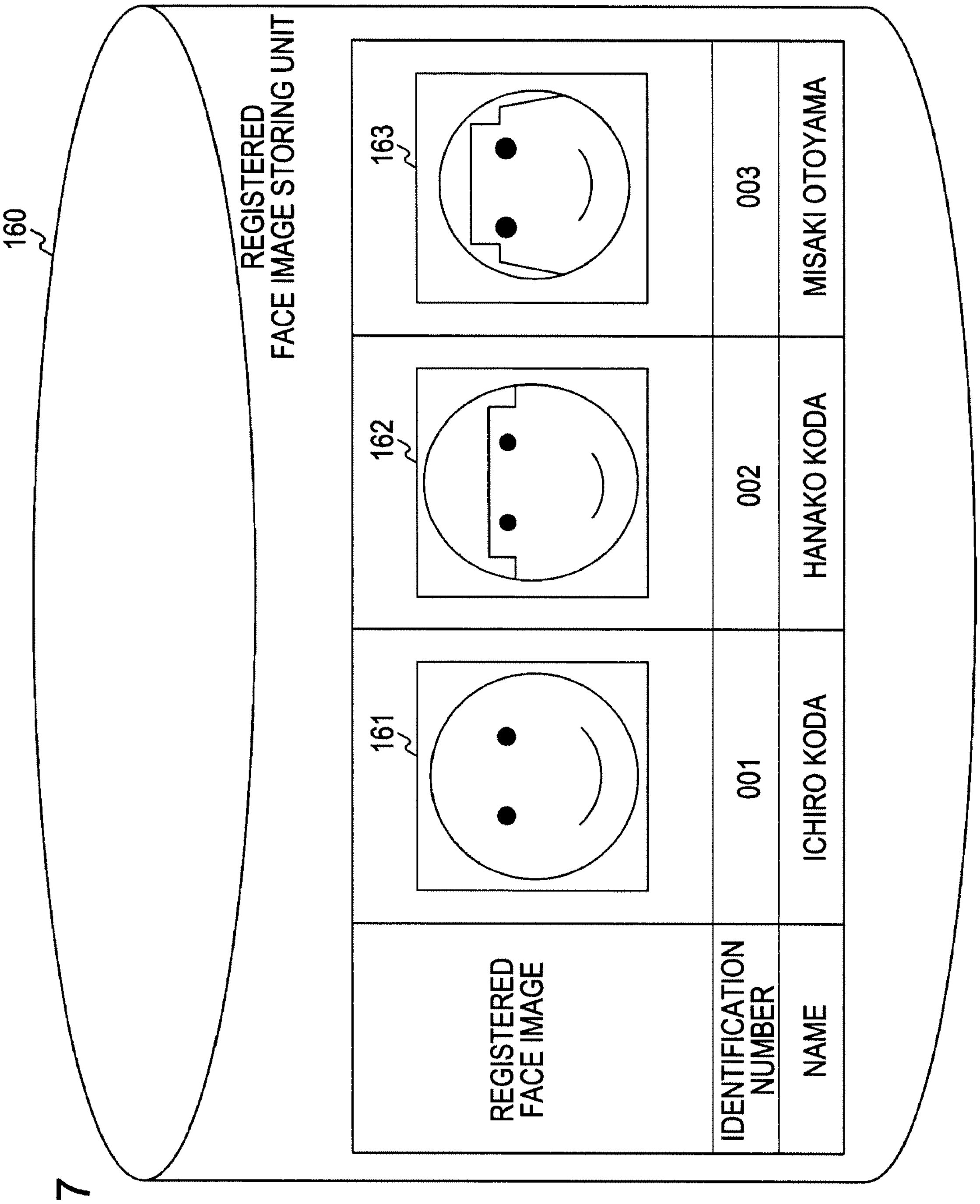
160
REGISTERED FACE IMAGE STORING UNIT
REGISTERED FACE IMAGE
IDENTIFICATION NUMBER
NAME
161
162
163
001
002
003
ICHIRO KODA
HANAKO KODA
MISAKI OTOYAMA

FIG. 8A

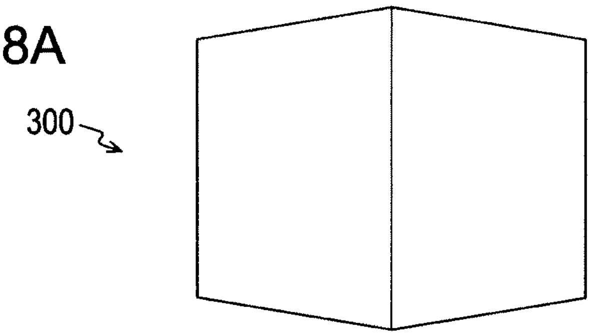


FIG. 8B

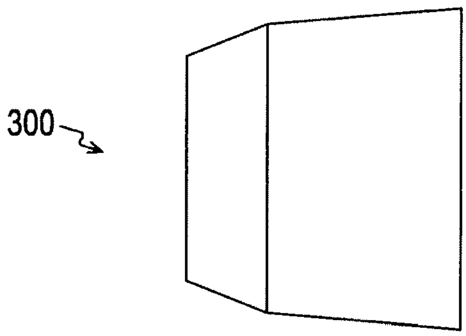


FIG. 8C

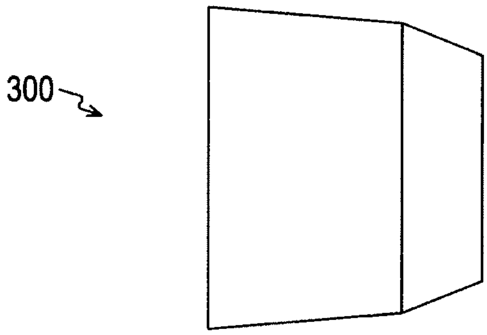


FIG. 8D

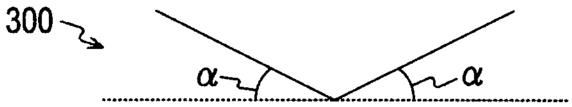

# FIG. 9

181

| | 182 LEFT-FACING | 183 RIGHT-FACING |
|---|---|---|
| 184 YAW ROTATION ANGLE ($\theta$) | −30 DEGREES | 30 DEGREES |
| 185 ROLL ROTATION ANGLE ($\phi$) | . . . | . . . |
| 186 TRANSLATION DISTANCE ALONG x-AXIS (Tx) | . . . | . . . |
| 187 TRANSLATION DISTANCE ALONG y-AXIS (Ty) | . . . | . . . |
| 188 TRANSLATION DISTANCE ALONG z-AXIS (Tz) | . . . | . . . |

FIG. 10A

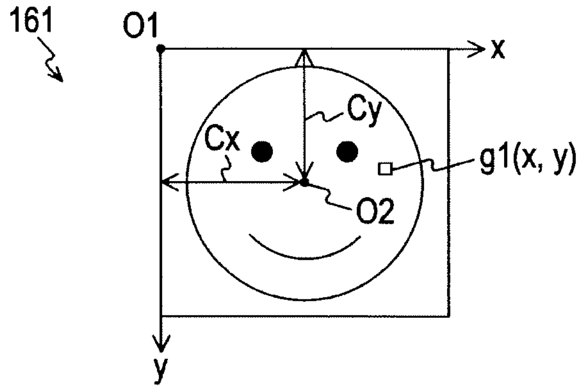


FIG. 10B

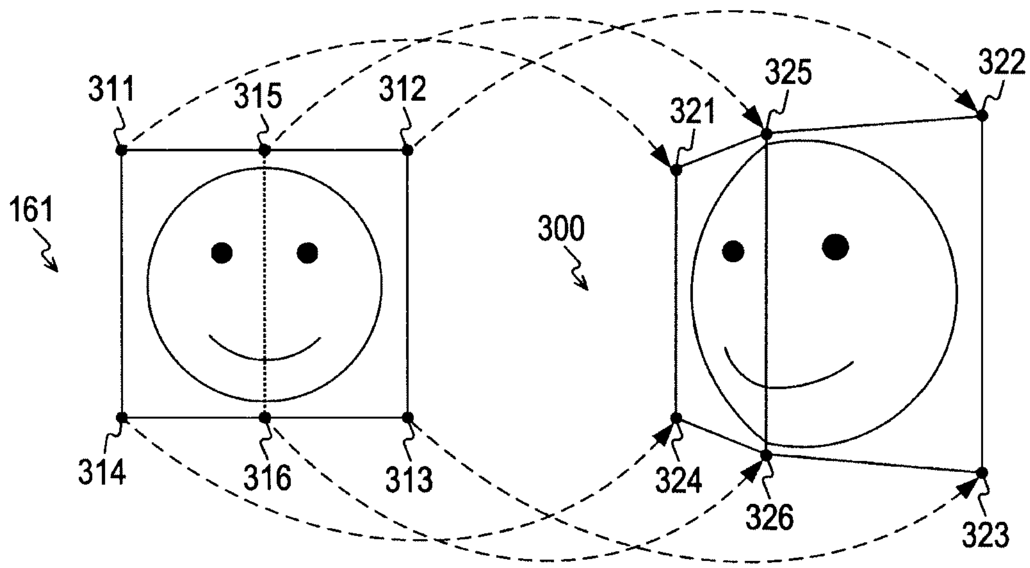

FIG. 11A

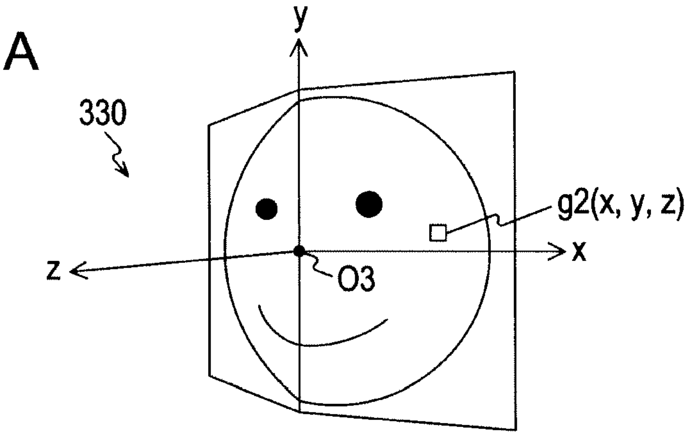


FIG. 11B

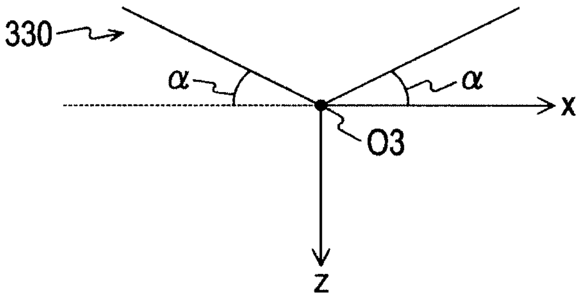


FIG. 11C

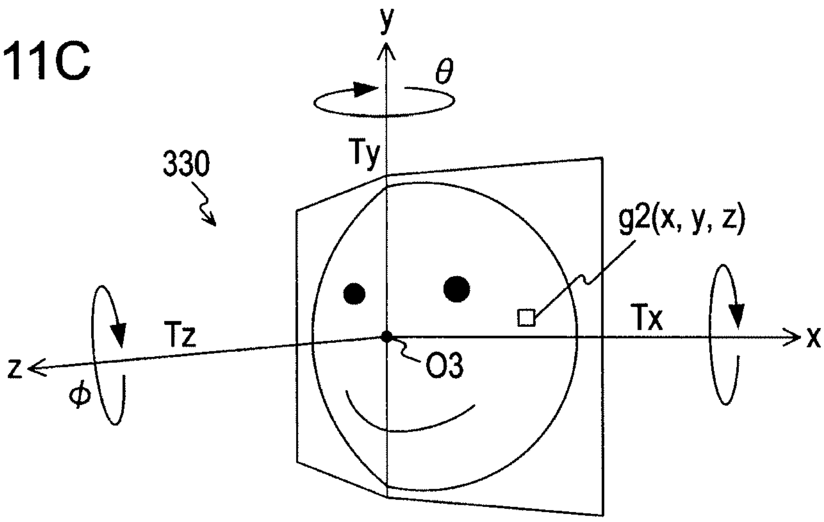

FIG. 12

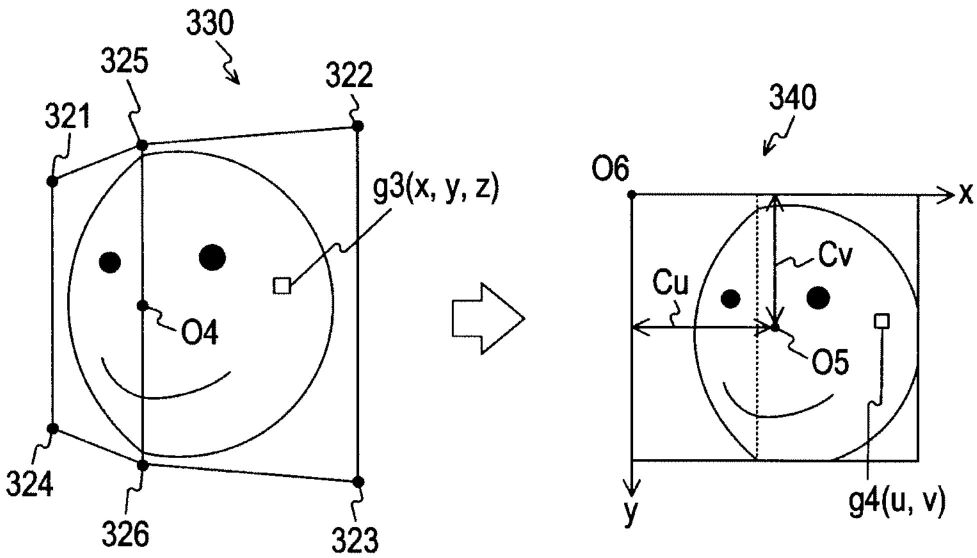

# FIG. 13A

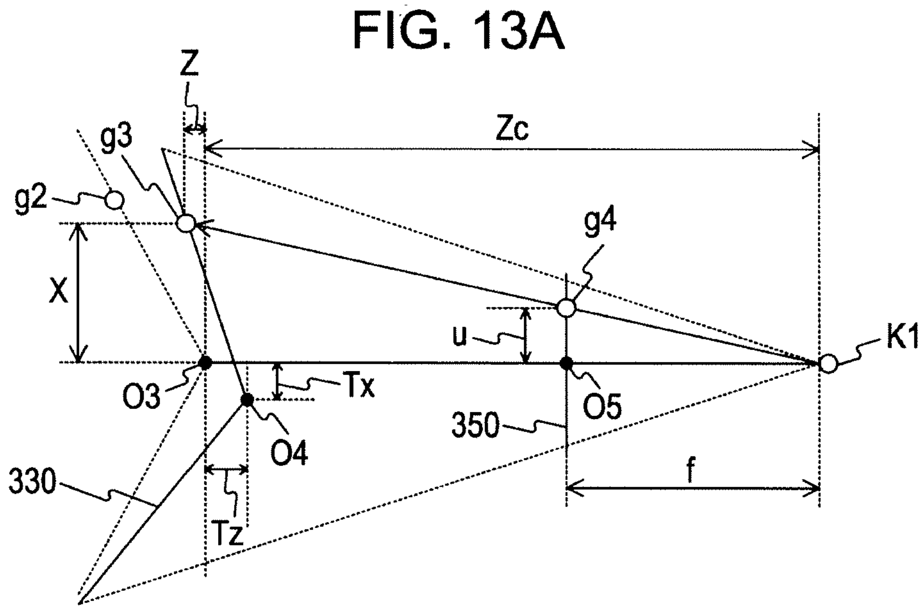


# FIG. 13B

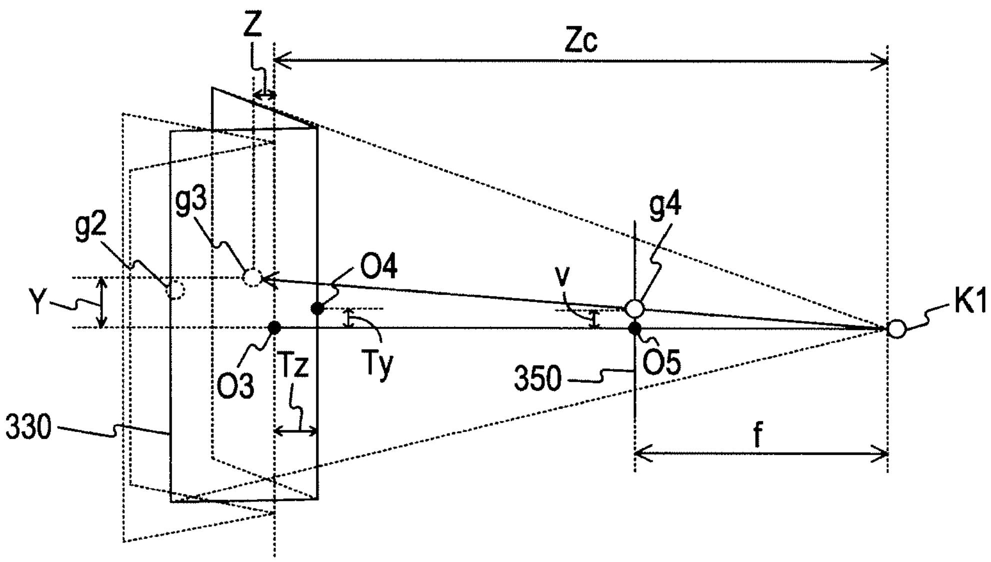

FIG. 14A

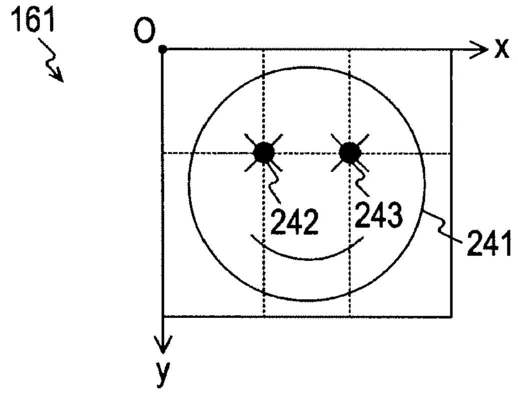


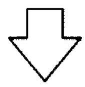

FIG. 14B

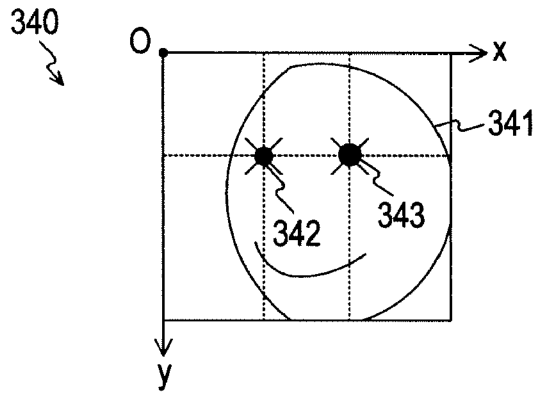

FIG. 15A

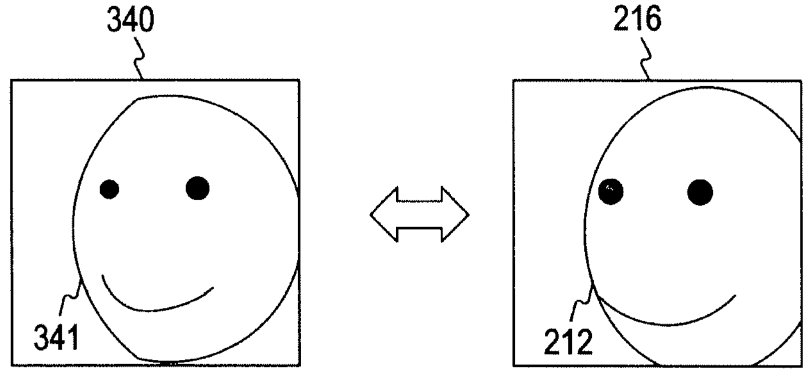


FIG. 15B

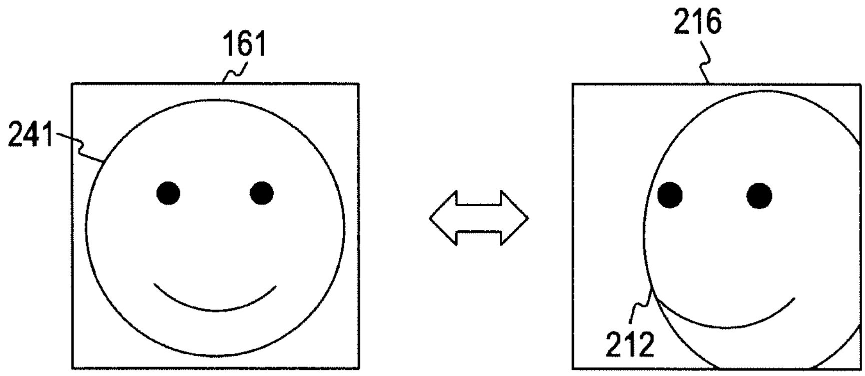

FIG. 16

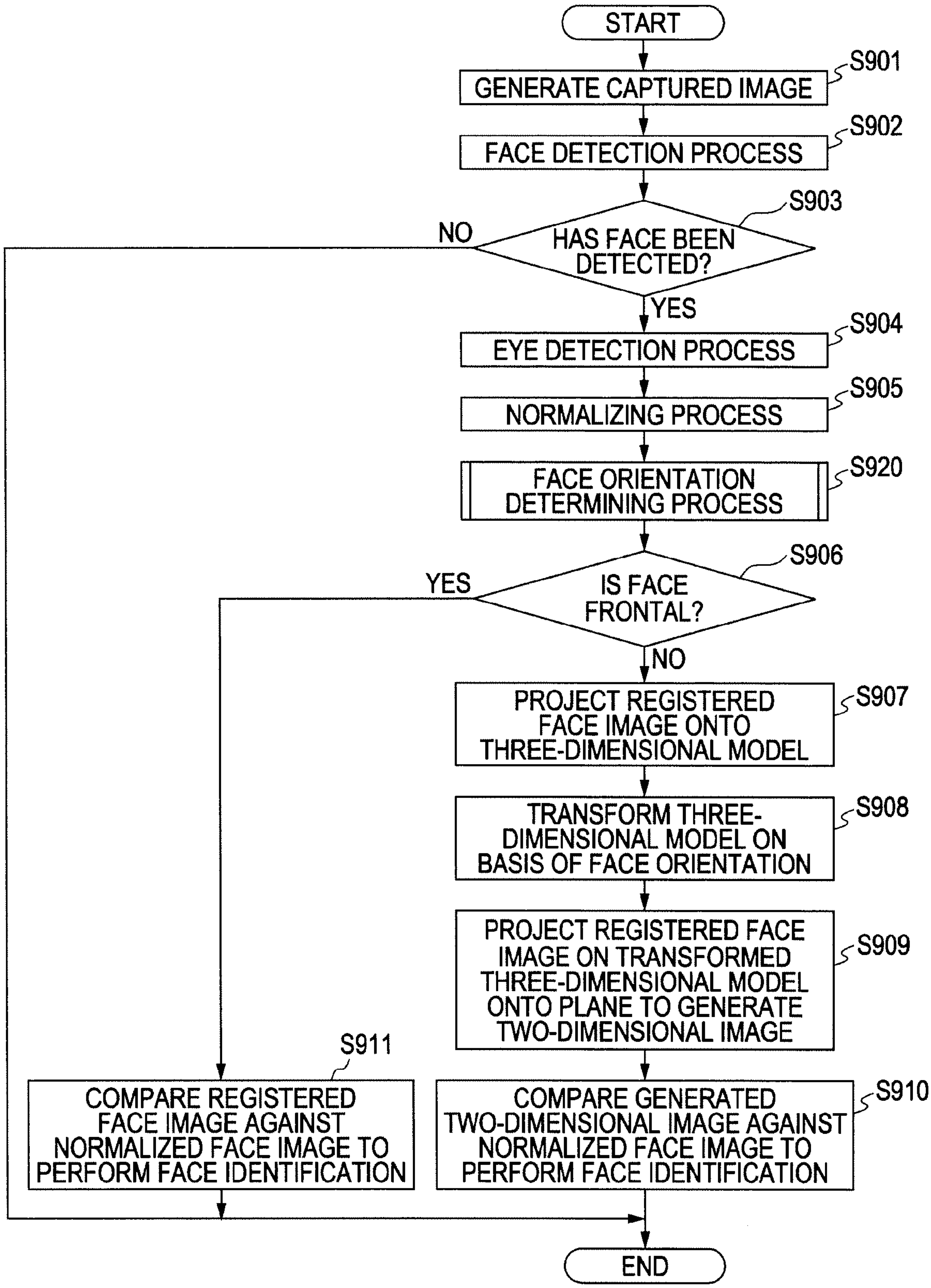
START
S901
GENERATE CAPTURED IMAGE
S902
FACE DETECTION PROCESS
S903
HAS FACE BEEN DETECTED?
NO
YES
S904
EYE DETECTION PROCESS
S905
NORMALIZING PROCESS
S920
FACE ORIENTATION DETERMINING PROCESS
S906
IS FACE FRONTAL?
YES
NO
S907
PROJECT REGISTERED FACE IMAGE ONTO THREE-DIMENSIONAL MODEL
S908
TRANSFORM THREE-DIMENSIONAL MODEL ON BASIS OF FACE ORIENTATION
S909
PROJECT REGISTERED FACE IMAGE ON TRANSFORMED THREE-DIMENSIONAL MODEL ONTO PLANE TO GENERATE TWO-DIMENSIONAL IMAGE
S911
COMPARE REGISTERED FACE IMAGE AGAINST NORMALIZED FACE IMAGE TO PERFORM FACE IDENTIFICATION
S910
COMPARE GENERATED TWO-DIMENSIONAL IMAGE AGAINST NORMALIZED FACE IMAGE TO PERFORM FACE IDENTIFICATION
END

FIG. 17

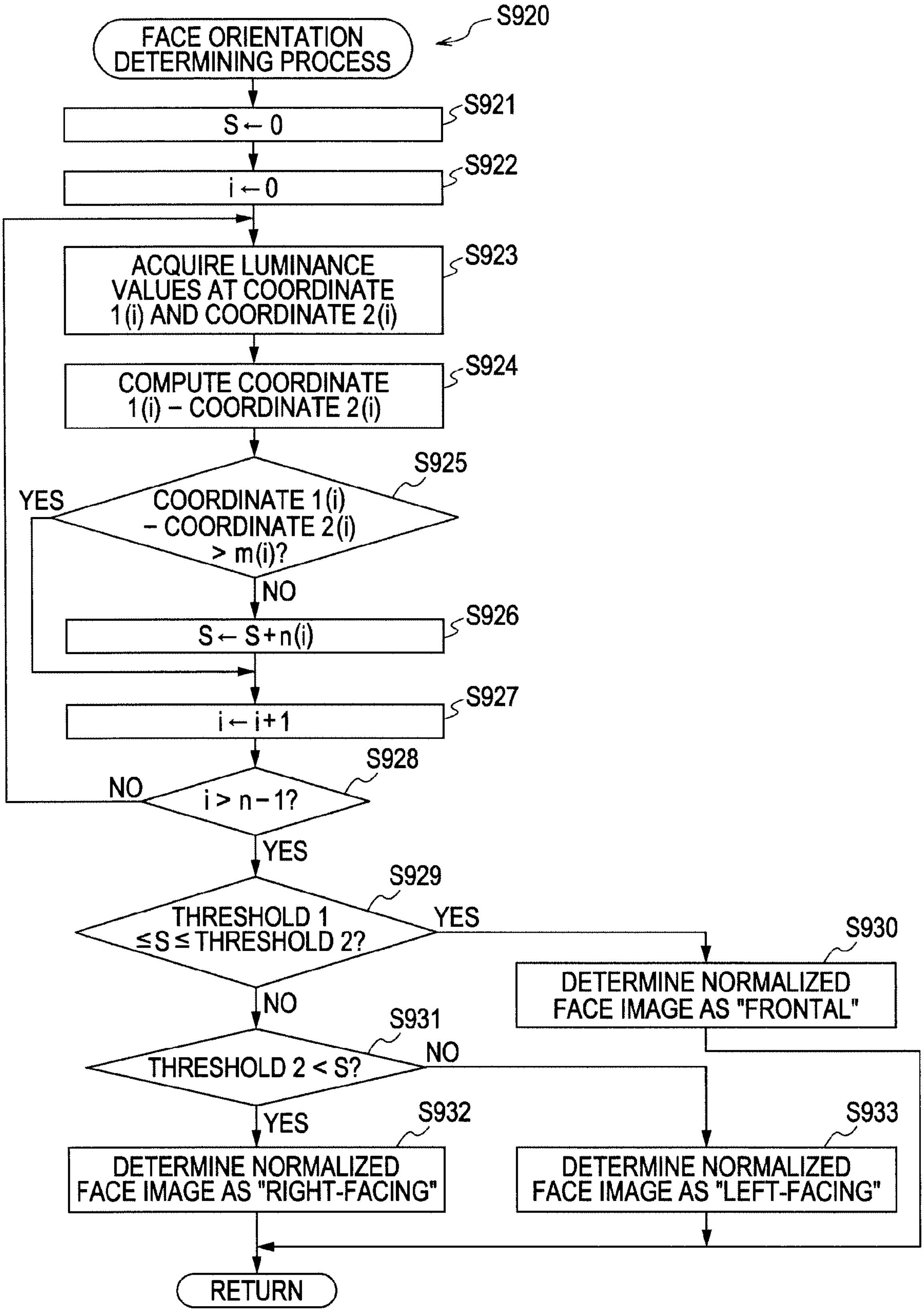
S920
FACE ORIENTATION DETERMINING PROCESS
S921
S ← 0
S922
i ← 0
S923
ACQUIRE LUMINANCE VALUES AT COORDINATE 1 (i) AND COORDINATE 2 (i)
S924
COMPUTE COORDINATE 1 (i) – COORDINATE 2 (i)
S925
COORDINATE 1 (i) – COORDINATE 2 (i) > m (i)?
YES
NO
S926
S ← S + n (i)
S927
i ← i + 1
S928
i > n – 1?
NO
YES
S929
THRESHOLD 1 ≤ S ≤ THRESHOLD 2?
YES
NO
S930
DETERMINE NORMALIZED FACE IMAGE AS "FRONTAL"
S931
THRESHOLD 2 < S?
NO
YES
S932
DETERMINE NORMALIZED FACE IMAGE AS "RIGHT-FACING"
S933
DETERMINE NORMALIZED FACE IMAGE AS "LEFT-FACING"
RETURN

FIG. 18

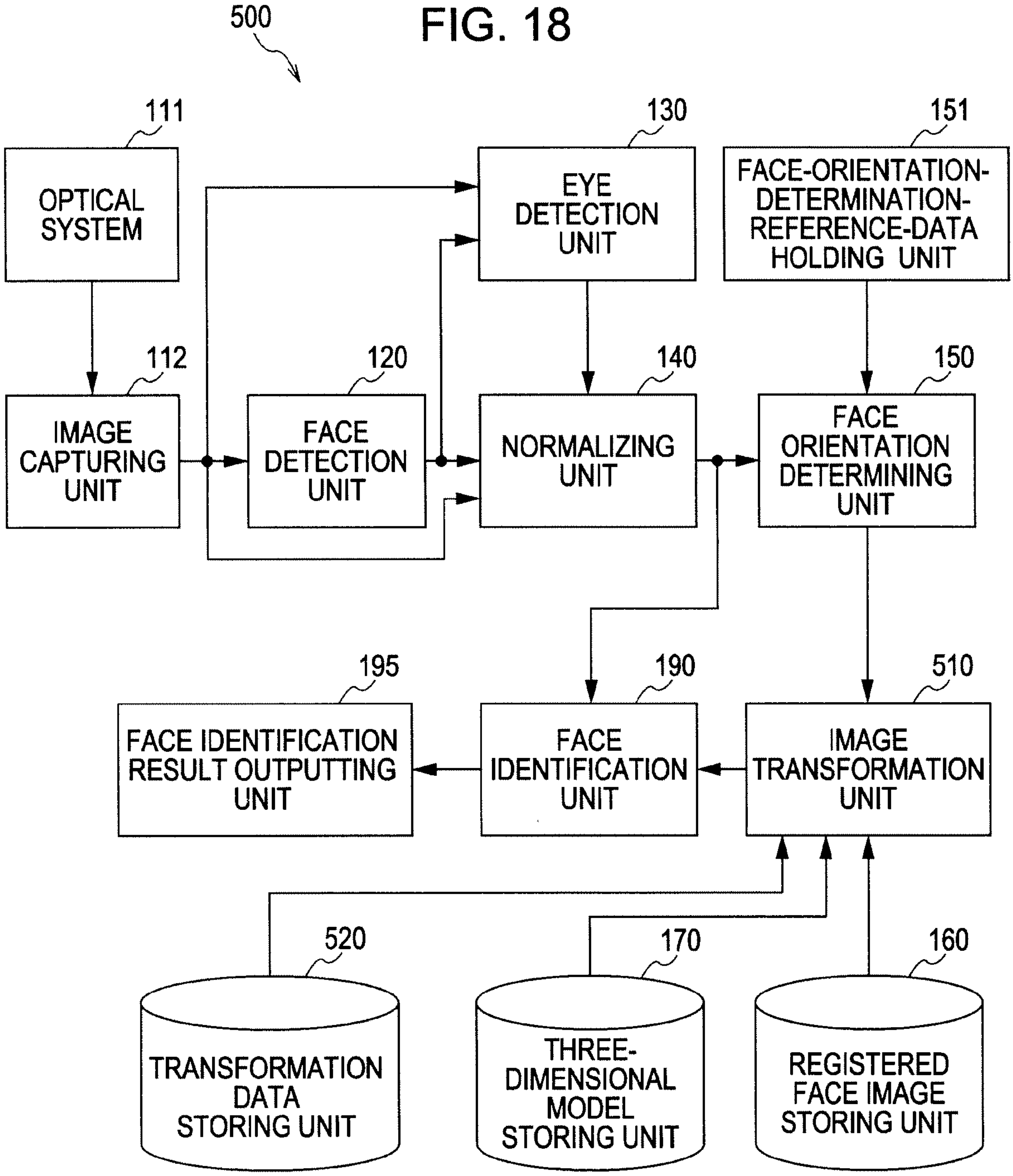
500
111
OPTICAL SYSTEM
112
IMAGE CAPTURING UNIT
120
FACE DETECTION UNIT
130
EYE DETECTION UNIT
140
NORMALIZING UNIT
151
FACE-ORIENTATION-DETERMINATION-REFERENCE-DATA HOLDING UNIT
150
FACE ORIENTATION DETERMINING UNIT
195
FACE IDENTIFICATION RESULT OUTPUTTING UNIT
190
FACE IDENTIFICATION UNIT
510
IMAGE TRANSFORMATION UNIT
520
TRANSFORMATION DATA STORING UNIT
170
THREE-DIMENSIONAL MODEL STORING UNIT
160
REGISTERED FACE IMAGE STORING UNIT

# FIG. 19

520

521 522

523

| | LEFT-FACING | | RIGHT-FACING | |
|---|---|---|---|---|
| | $x \geq 0$ | $x < 0$ | $x \geq 0$ | $x < 0$ |
| TRANSFORMATION PARAMETERS | A | | A | |
| | $B_0$ | $B_1$ | $B_1$ | $B_0$ |
| | $C_0$ | $C_1$ | $C_1$ | $C_0$ |
| | $D_0$ | $D_1$ | $D_1$ | $D_0$ |
| | E | | E | |

FIG. 20A

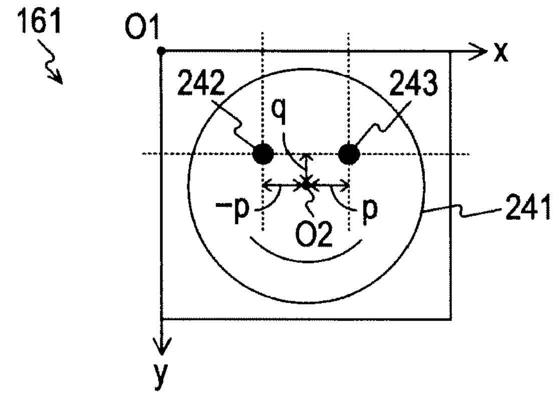


FIG. 20B

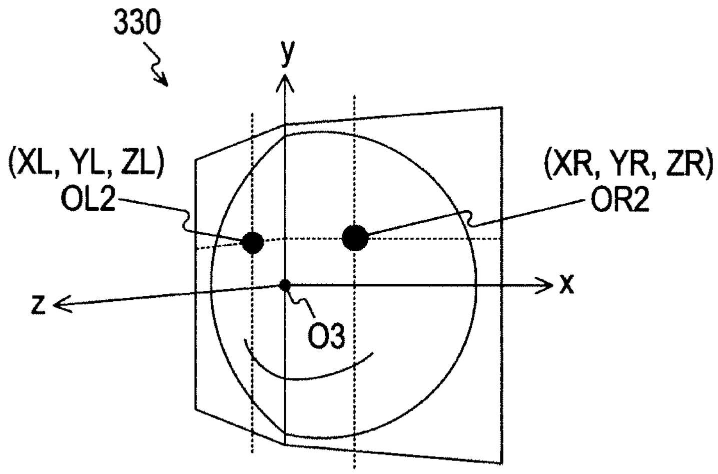


FIG. 20C

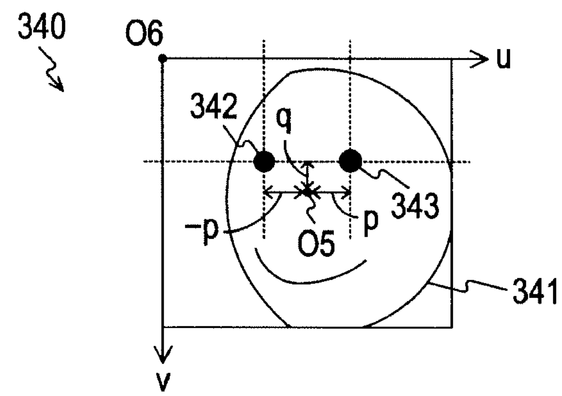

FIG. 21A

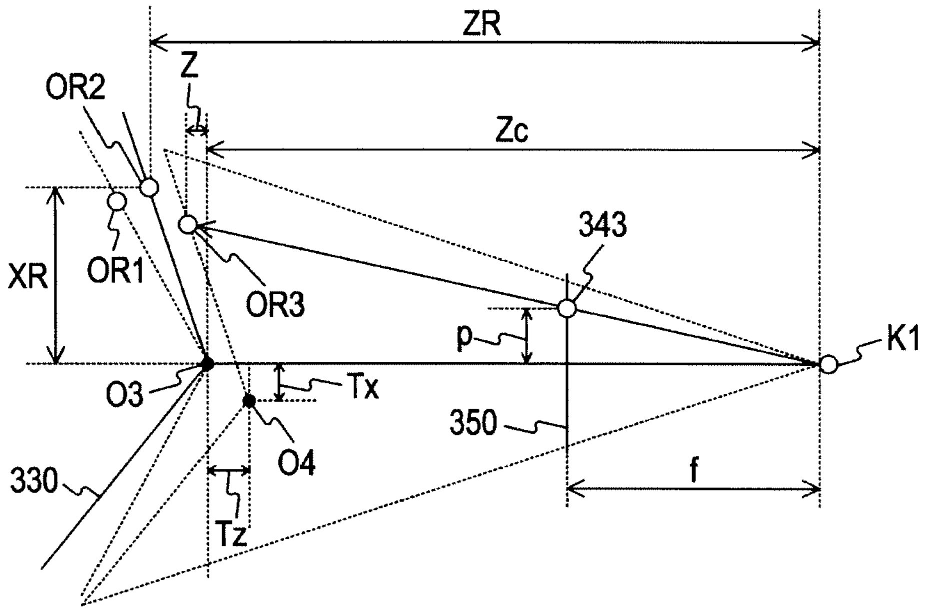


FIG. 21B

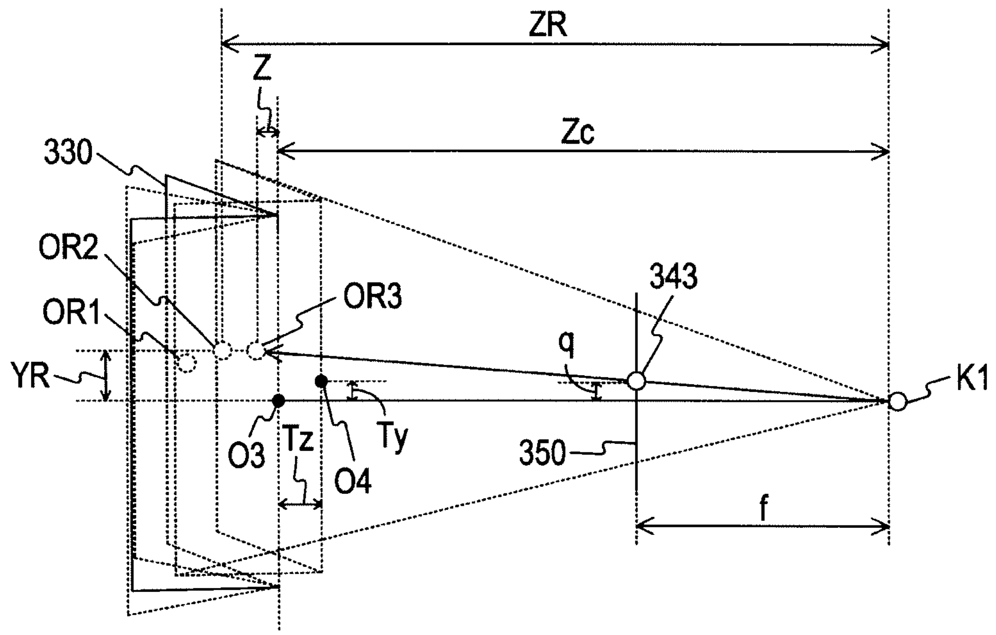

FIG. 22A

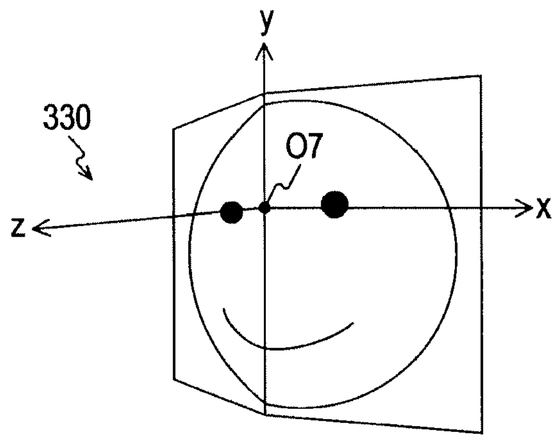


FIG. 22B

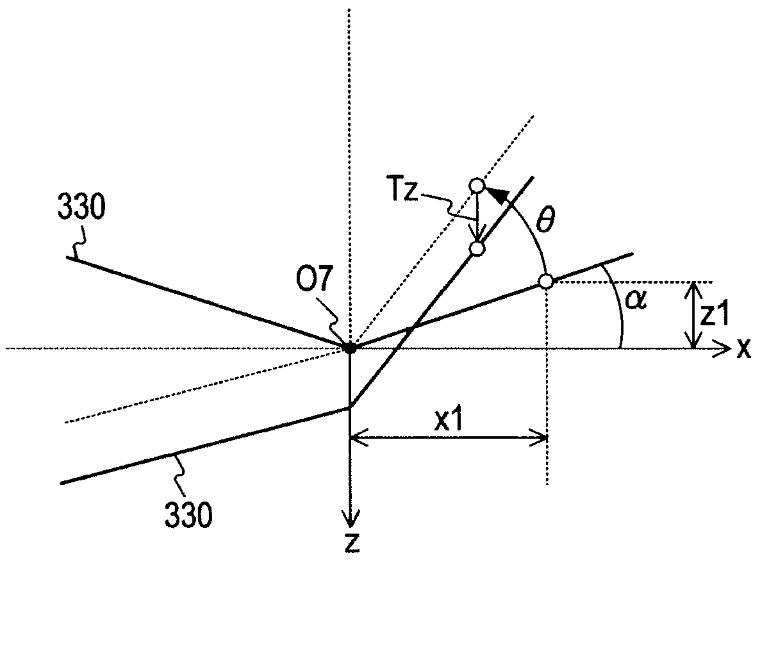

FIG. 23

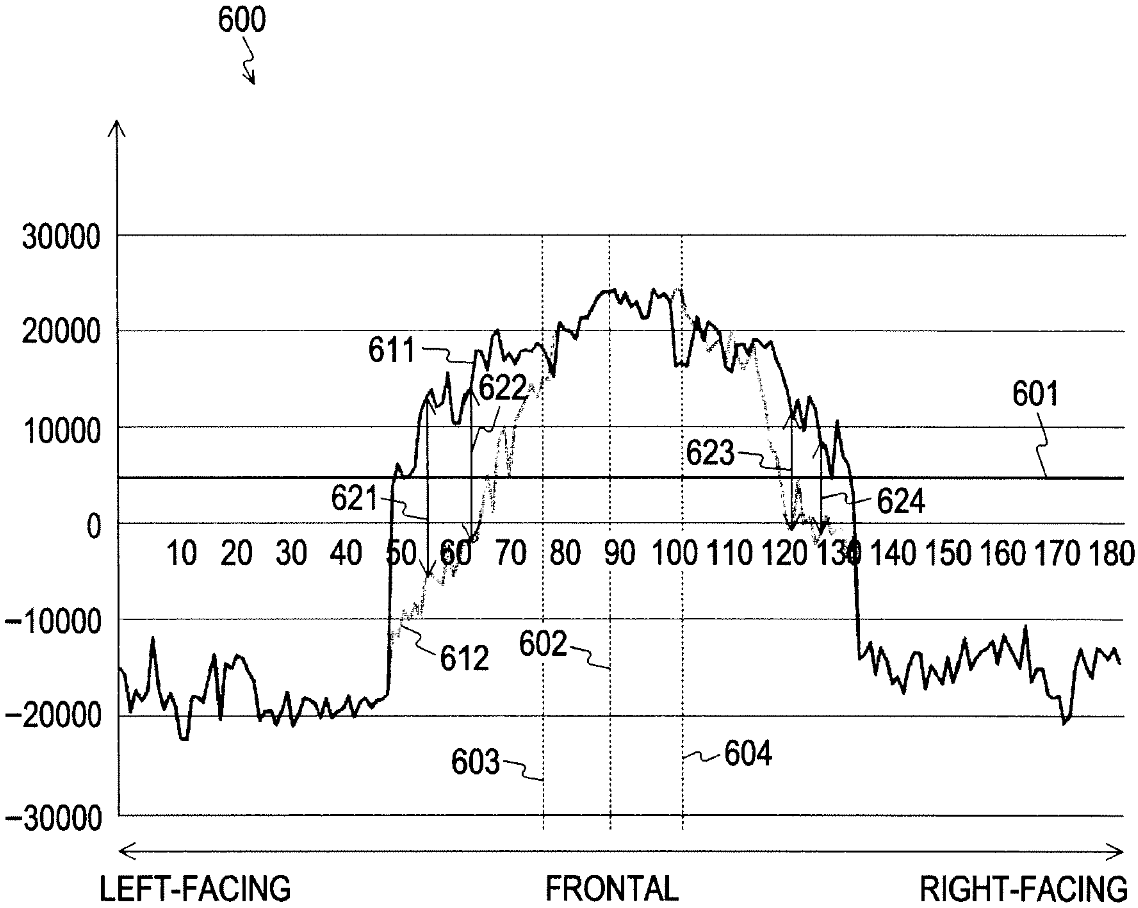
600
30000
20000
10000
0
-10000
-20000
-30000
611
622
621
612
602
603
604
601
623
624
10 20 30 40 50 60 70 80 90 100 110 120 130 140 150 160 170 180
LEFT-FACING
FRONTAL
RIGHT-FACING

FIG. 24

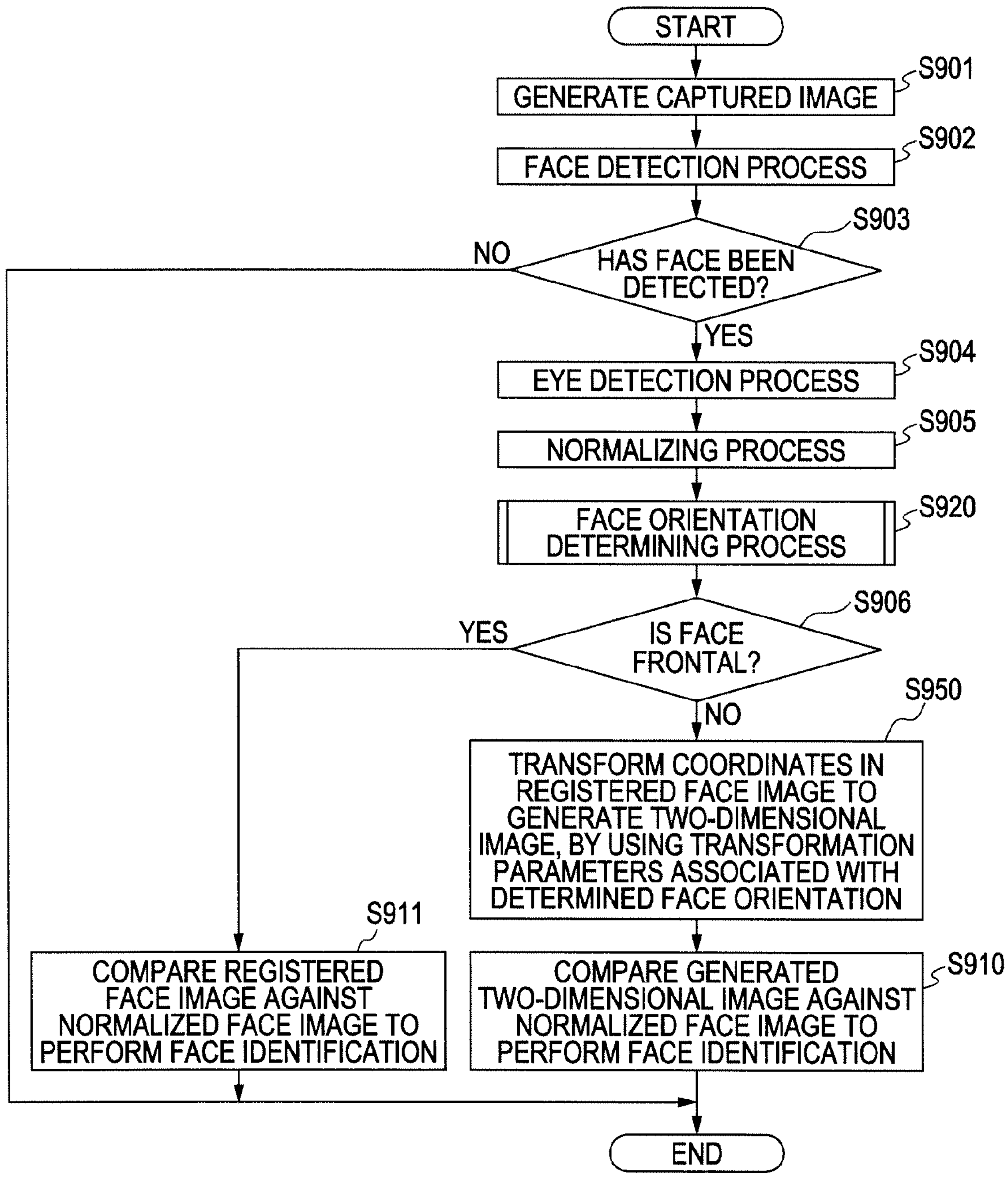
START
GENERATE CAPTURED IMAGE
S901
FACE DETECTION PROCESS
S902
HAS FACE BEEN DETECTED?
S903
NO
YES
EYE DETECTION PROCESS
S904
NORMALIZING PROCESS
S905
FACE ORIENTATION DETERMINING PROCESS
S920
IS FACE FRONTAL?
S906
YES
NO
TRANSFORM COORDINATES IN REGISTERED FACE IMAGE TO GENERATE TWO-DIMENSIONAL IMAGE, BY USING TRANSFORMATION PARAMETERS ASSOCIATED WITH DETERMINED FACE ORIENTATION
S950
COMPARE REGISTERED FACE IMAGE AGAINST NORMALIZED FACE IMAGE TO PERFORM FACE IDENTIFICATION
S911
COMPARE GENERATED TWO-DIMENSIONAL IMAGE AGAINST NORMALIZED FACE IMAGE TO PERFORM FACE IDENTIFICATION
S910
END

FIG. 25A

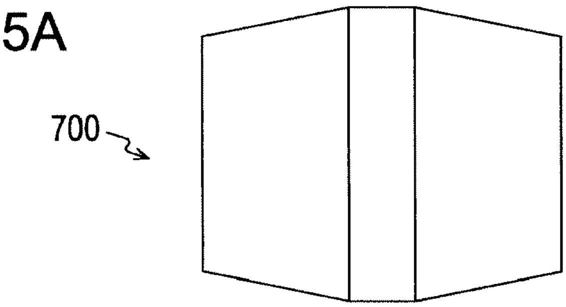


FIG. 25B

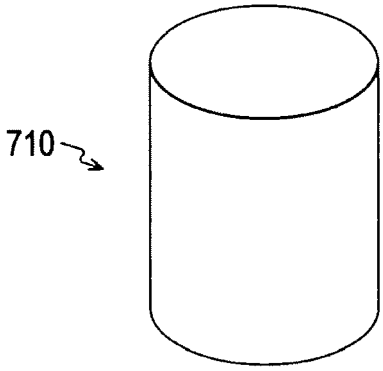


FIG. 25C

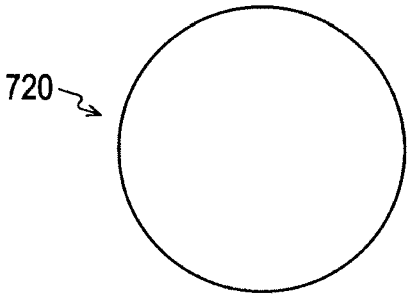


FIG. 25D

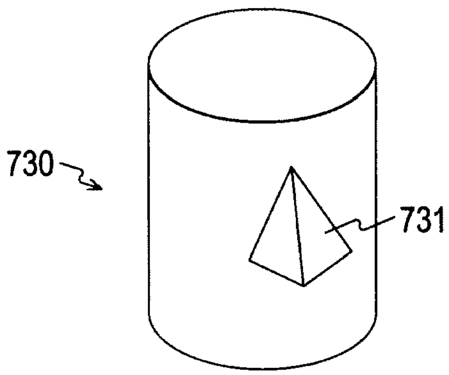

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007115109 A
- JP 2004133637 A
- JP 2008152643 A